# EUROPEAN PATENT SPECIFICATION

(11) **EP 4 356 726 B1**
(45) Date of publication and mention of the grant of the patent: **19.08.2026**
(21) Application number: 22825051.0
(22) Date of filing: 16.06.2022
(51) Int. Cl.: A01K 61/80, A01K 29/00

(54) **FEEDING METHOD, FEEDING SYSTEM, AND PROGRAM**
FÜTTERUNGSVERFAHREN, FÜTTERUNGSSYSTEM UND PROGRAMM
PROCÉDÉ D'ALIMENTATION, SYSTÈME D'ALIMENTATION, ET PROGRAMME

(30) Priority: 18.06.2021 JP 2021101688
(43) Date of publication of application: 24.04.2024
(73) Proprietor: Nippon Steel Engineering Co., Ltd., Tokyo 141-8604 (JP)
(72) Inventor: MIKI, Ryohji, Tokyo 141-8604 (JP); ABE, Masaharu, Tokyo 141-8604 (JP); WATANABE, Yuutaroh, Tokyo 141-8604 (JP); IGARASHI, Yasufumi, Tokyo 141-8604 (JP)
(74) Representative: Vossius & Partner Patentanwälte Rechtsanwälte mbB
(86) International application number: PCT/JP2022/024124
(87) International publication number: WO 2022/265063

(56) References cited:
- WO-A1-2021/038753
- CN-A- 109 757 419
- JP-A- 2000 201 568
- JP-A- 2020 078 278
- JP-A- H09 262 040
- JP-A- H1 068 780
- KR-B1- 102 185 637
- US-A- 5 732 655
- US-A1- 2019 021 292
- ANONYMOUS: "Aquaculture technology provider UMITRON launches Fish Appetite Index (FAI), the world’s first real-time ocean-based fish appetite detection system", UMITRON, 14 August 2019 (2019-08-14), XP093015396, Retrieved from the Internet <URL:https://pr-en.umitron.com/post/186989478196/fai> [retrieved on 20230118]

## Description

### Technical Field

The present disclosure relates to a feeding method, a feeding system, and a program.

### Background Art

Patent Document 1 discloses an automatic feeding system including an automatic feeding machine, a remaining feed sensor that detects a remaining feed amount, and a control unit that controls the feed amount of the automatic feeding machine based on the remaining feed amount detected by the remaining feed sensor. Patent Document 2 relates to a feeding device for fish farming. Patent Document 3 relates to a feeding system based on fish feed consumption. Patent Document 4 relates to a system for feeding aquatic animals.

### Citation List

### Patent Literature

[Patent Document 1] Japanese Unexamined Patent Publication No. 2000-4711
[Patent Document 2] KR 102 185 637 B1
[Patent Document 3] CN 109 757 419 A
[Patent Document 4] US 2019/021292 A1

### Summary of Invention

### Technical Problem

The present disclosure provides a feeding method, a feeding system, and a program effective for more efficient feeding.

### Solution to Problem

The invention is specified by the independent claims. Preferred embodiments are defined in the dependent claims. In the following description, although numerous features may be designated as optional, it is nevertheless acknowledged that all features comprised in the independent claims are not to be read as optional. A feeding method according to an embodiment of the present disclosure includes: evaluating a remaining feed amount based on a detection result of a preserve environment by the sensor installed in a preserve; evaluating a feed intake activity of a fish in the preserve based on a detection result of the preserve environment; and generating a feed rate command value based on the evaluation result of the remaining feed amount and the evaluation result of the feed intake activity to control the feeding machine to feed at a feed rate corresponding to the feed rate command value.

According to the feeding method, the feed rate command value is calculated based on the evaluation result of the remaining feed amount, so that the feeding machine may be controlled to suppress the remaining feed. In addition, by calculating the feed rate command value further based on the evaluation result of the feed intake activity, it is possible to control the feeding machine so as to suppress the shortage of feed in a situation in which there is no remaining feed. Therefore, it is possible to suppress an excess or deficiency of the feed amount. Therefore, it is effective for more efficient feeding.

The feed rate command value may be calculated such that the feed rate command value decreases as the remaining feed amount increases, and the feed rate command value increases as the feed intake activity increases. In this case, it is possible to more reliably suppress the excess or deficiency of the feed amount.

A feed intake score is calculated based on the evaluation result of the remaining feed amount and the evaluation result of the feed intake activity, and the feed rate command value is calculated such that the feed intake score follows a target score. In this case, an appropriate feed rate command value may be readily calculated by integrating the evaluation result of the remaining feed amount and the evaluation result of the feed intake activity into one feed intake score.

The feed intake score may be calculated such that the direction in which the feed intake score varies as the remaining feed amount increases and the direction in which the feed intake score varies as the feed intake activity increases are opposite to each other. In this case, it is possible to calculate the feed intake score that more accurately represents the excess or deficiency situation of the feed amount.

An influence degree of the feed intake activity with respect to the feed intake score may be lowered in response to the evaluation result of the remaining feed amount exceeding the predetermined level. In this case, by increasing the influence degree of the remaining feed amount with respect to the feed intake score in response to the remaining feed amount exceeding the predetermined level, excessive feeding can be more reliably suppressed.

The feeding method may further include displaying the feed intake score on a user interface. In this case, it is possible for an operator to recognize the excess or deficiency of the feed more readily.

The target score may be displayed on the user interface together with the feed intake score. In this case, it is possible for the operator to recognize the excess or deficiency of the feed more readily.

The feeding method further includes correcting the feed rate command value based on a pre-planned feed rate target value. In this case, while the feed rate is adjusted in accordance with the feed intake state, it is possible to suppress the deviation of the feeding result from the feeding plan.

The feeding method further includes calculating the feed rate target value in accordance with time based on a feed pattern representing a relationship between an elapsed time from a feed start time to a feed end time and a feed rate. In this case, by changing the feed rate target value in accordance with the time, the feed amount can be finely adjusted in accordance with the biology of the aquatic organism.

The feed start time of the feed pattern may be changed in accordance with a sunrise time, the feed end time of the feed pattern may be changed in accordance with a sunset time, and the feed rate target value in accordance with the time may be calculated based on the changed feed pattern. By changing the feed pattern in accordance with the sunrise time and the sunset time, it is not necessary for the user to change the daily feed start time, and the setting of feeding becomes simpler.

The feeding method further includes: evaluating a weight of the fish; and calculating a feed amount target value in a day based on an evaluation result of the weight of the fish. The feed rate target value in accordance with the time is calculated based on the feed amount target value and the feed pattern. In this case, it is possible to calculate a more efficient feed rate target value further based on the evaluation result of the weight of the aquatic organism.

The feed rate target value in accordance with the time may be calculated such that the total feed amount from the feed start time to the feed end time according to the feed pattern matches the feed amount target value. The evaluation result of the weight of the aquatic organism can be readily and appropriately reflected in the feed rate target value.

Evaluating the weight of the aquatic organism may include: acquiring a measurement result of the weight of the aquatic organism; evaluating the feed intake amount from the measurement timing of the weight of the aquatic organism to the evaluation target timing based on the feed rate; estimating the weight increase rate of the aquatic organism from the measurement timing to the evaluation target timing based on the evaluation result of the feed intake amount; and estimating the weight of the aquatic organism at the evaluation target timing based on the measurement result of the weight of the aquatic organism and the estimation result of the weight increase rate of the aquatic organism. In this case, by combining the measurement of the total weight with the estimation of the total weight based on the evaluation result of the feed intake amount, it is possible to suppress the shortage of the increase in the feed amount with respect to the increase in the weight of the aquatic organism.

The feeding method may further include estimating a population of aquatic organisms at the evaluation target timing further based on a predicted rate of decrease of the population of aquatic organisms. A measurement result of the weight per one aquatic organism may be acquired. The weight per one aquatic organism at the evaluation target timing may be estimated based on the measurement result of the weight per one aquatic organism and an estimation result of the weight increase rate of the aquatic organism. A total weight of the aquatic organism at the evaluation target timing may be estimated based on the estimation result of the weight per animal and the estimation result of population. In this case, the total weight of the aquatic organism can be estimated with higher reliability by being further based on the predicted reduction rate of the population of the aquatic organism.

The feeding method may further include displaying the feed pattern on a user interface. In this case, the operator can readily recognize the feed pattern that has been set.

A sunrise time and a sunset time may be displayed on the user interface together with the feed pattern. In this case, the operator can readily recognize the relationship between the sunrise time, the sunset time, and the feed pattern that has been set.

The feeding method may further include changing the feed pattern based on an editing input for the feed pattern displayed on the user interface. The feed rate target value in accordance with the time may be calculated based on the feed pattern after change. In this case, the feed pattern can be changed by an editing input to the feed pattern displayed on the user interface, thereby further improving the usability for the operator.

The feeding method may further include: saving the feed pattern displayed on the user interface based on a save command input; and loading the saved feed pattern based on the load command input and displaying the feed pattern on the user interface. In this case, by making the feed pattern that has already been set reusable, it is possible to further improve the usability for the operator.

The feeding method may further include: allocating the stored feed pattern to a shortcut object on the user interface based on an allocation command input; and loading the saved feed pattern and displaying the feed pattern on the user interface in response to an operation of the shortcut object. In this case, by making it easier to call the stored feed pattern, the usability for the operator can be further improved.

The feeding method may further include displaying the current feed rate on the user interface for each of a plurality of preserves. In this case, it is possible to cause the operator to readily recognize the feed situation in the plurality of preserves.

The feeding method may further include displaying a current feed rate and an achievement rate for a feed amount target value on a user interface for each of a plurality of preserves. In this case, it is possible to make the operator more readily recognize the feed situation in the plurality of preserves.

The feeding method may further include displaying, on a user interface, a feed proportion representing a feed amount as a ratio to a total weight of the aquatic organism and an increase rate of the total weight of the aquatic organism for each of the plurality of preserves. In this case, the operator can readily recognize the appropriateness of the feeding state.

Displaying the feed proportion and the increase rate on the user interface may include displaying a distribution chart in which the feed proportion and the increase rate are mapped to a coordinate having a first coordinate axis representing a magnitude of the feed proportion and a second coordinate axis representing a magnitude of the increase rate for each of a plurality of preserves. In this case, the operator can more readily recognize the appropriateness of the feeding state.

The display chart further displays a plurality of contour lines representing a relationship between the feed proportion and the increase rate for each conversion ratio representing a ratio of the feed proportion to the increase rate (a plurality of contour lines of the feed conversion ratio may be displayed on the distribution chart). In this case, the operator can more readily recognize the appropriateness of the feeding state.

The remaining feed amount may be evaluated based on an image of a camera installed upward below the feed region of the aquatic organism in the preserve. In this case, the remaining feed amount can be evaluated with high reliability.

The feed intake activity may be further evaluated based on the image of the camera. In this case, the feed intake activity can also be evaluated with high reliability.

An image variation amount caused by a movement of the aquatic organism may be calculated based on the image of the camera, and the feed intake activity may be evaluated based on the image variation amount. In this case, it is possible to readily evaluate the feed intake activity based on the image of the camera.

The feed intake activity may be evaluated such that the feed intake activity decreases as the image variation amount increases. In this case, the feed intake activity can be evaluated with higher reliability.

A feeding system according to an embodiment of the present disclosure includes: a feeding machine configured to feed into a preserve containing an fish; a sensor configured to detect a preserve environment; and a feed control device configured to control a feed rate of the feeding machine, in which the feed control device include: a remaining feed evaluation unit configured to evaluate the remaining feed amount based on the detection result of the preserve environment by the sensor; a feed intake activity evaluation unit configured to evaluate the feed intake activity of the fish based on the detection result of the preserve environment; and a speed control unit configured to generate a feed rate command value based on an evaluation result of the remaining feed amount and an evaluation result of the feed intake activity, generate a feed rate command value to make the feed intake score follow a target score, evaluate a weight of the fish, calculate a feed amount target value in a day based on the evaluation result of the weight of the fish, calculate a feed rate target value in accordance with the time based on the feed amount target value and a feed pattern, the feed pattern representing a relationship between an elapsed time and a feed rate from a feed start time to a feed end time, correct the feed rate command value based on a pre-planned feed rate target value, and control the feeding machine to feed at a feed rate corresponding to the feed rate command value.

A computer program according to an embodiment of the present disclosure the computer program comprising instructions which, when the program is executed by a computing device, causes the device to execute: evaluating a remaining feed amount based on a detection result of a preserve environment by a sensor installed in a preserve; evaluating a feed intake activity of fish in the preserve based on a detection result of the preserve environment; and generating a feed rate command value based on an evaluation result of the remaining feed amount and an evaluation result of the feed intake activity, generating a feed rate command value to make the feed intake score follow a target score, evaluating a weight of the fish, calculating a feed amount target value in a day based on the evaluation result of the weight of the fish, calculating a feed rate target value in accordance with the time based on the feed amount target value and a feed pattern, the feed pattern representing a relationship between an elapsed time and a feed rate from a feed start time to a feed end time, correcting the feed rate command value based on a pre-planned feed rate target value, and controlling the feeding machine to feed at a feed rate corresponding to the feed rate command value.

### Advantageous Effects of Invention

The present disclosure provides a feeding method, a feeding system, and a program effective for more efficient feeding.

### Brief Description of Drawings

FIG. 1 is a schematic diagram illustrating a feeding system.
FIG. 2 is a schematic diagram illustrating configurations of a management device and a feed control device.
FIG. 3 is a schematic diagram illustrating a modification of the management device.
FIG. 4 is a diagram illustrating a planning window.
FIG. 5 is a diagram illustrating a display screen of a feed intake score.
FIG. 6 is a diagram illustrating a status display screen.
FIG. 7 is a diagram illustrating a distribution chart.
FIG. 8 is a schematic diagram illustrating a hardware configuration of a management device and a feed control device.
FIG. 9 is a flowchart illustrating a procedure for acquiring a feed proportion profile.
FIG. 10 is a flowchart illustrating a procedure for acquiring a feed pattern.
FIG. 11 is a flowchart illustrating a weight evaluation procedure.
FIG. 12 is a flowchart illustrating a procedure for generating a feed rate target value.
FIG. 13 is a flowchart illustrating a start/stop procedure of automatic feed control.
FIG. 14 is a flowchart illustrating an automatic feed control procedure.
FIG. 15 is a flowchart illustrating a manual feed control procedure.
FIG. 16 is a flowchart illustrating a procedure for displaying a feed intake score.
FIG. 17 is a flowchart illustrating a procedure for displaying a feed status.
FIG. 18 is a flowchart illustrating a procedure for displaying a distribution chart.

### Description of Embodiments

Hereinafter, an embodiment will be described in detail with reference to the drawings. In the description, the same elements or elements having the same functions are denoted by the same reference numerals, and redundant description will be omitted.

### Aquaculture System

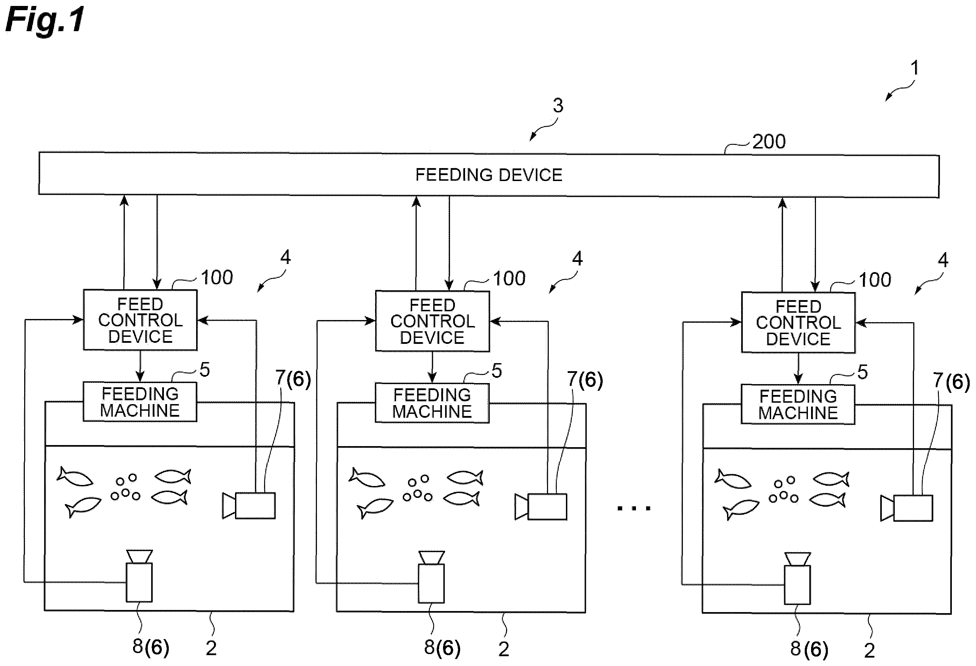

An aquaculture system 1 illustrated in FIG. 1 is a device used for culturing an aquatic organism. Specific examples of aquatic organisms include, but are not limited to, salmon, yellowtail, and the like. The aquaculture system 1 includes a plurality of preserves 2 and a feeding system 3. Each of the plurality of preserves 2 contains one or more aquatic organisms. The feeding system 3 includes a plurality of feeding devices 4 each feeding into the plurality of preserves 2. Each of the plurality of feeding devices 4 includes a feeding machine 5 and a sensor 6.

The feeding machine 5 is driven by an electric motor or the like, and feeds the corresponding preserve 2 at a feed rate corresponding to a control command. The feed rate represents a feed amount supplied into the preserve 2 per unit time. The feed amount is, for example, the amount (for example, mass) of the feed supplied. The sensor 6 detects the environment in the corresponding preserve 2 (preserve environment). Detecting the environment in the preserve 2 means acquiring one or more environmental information that is at least partially representative of the environment in the preserve 2. Specific examples of the environmental information include temperature in the preserve 2, brightness in the preserve 2, noise in the preserve 2, and image in the preserve 2.

As an example, the sensor 6 includes underwater cameras 7, 8. The underwater camera 7 acquires an image according to which the size of the aquatic organism in the water in the corresponding preserve 2 can be recognized. For example, the underwater camera 7 is a stereo camera capable of detecting a distance from the underwater camera 7 to the aquatic organism. With the stereo camera, the size of the aquatic organism can be detected based on the size of the aquatic organism in the image and the distance to the aquatic organism.

An underwater camera 8 is a camera capable of detecting the remaining feed in the water in the corresponding preserve 2. The underwater camera 8 is provided near the bottom of the preserve 2 and is directed upward. The remaining feed means feed that was supplied into the preserve 2 but was not ingested by the aquatic organism. With the underwater camera 8 directed upward near the bottom of the preserve 2, it is possible to detect the remaining feed that has not been ingested by the aquatic organism intaking feed near the surface of the water and has settled further from the depth that the aquatic organism is intaking feed.

A feed control device 100 adjusts the feed rate of the feeding device 4 by controlling a power source (for example, the electric motor described above) of the feeding machine 5. For example, the feed control device 100 is configured to calculate a feed rate command value based on a detection result of the preserve environment with the sensor 6 and control the feeding machine 5 to feed at a feed rate corresponding to the feed rate command value.

According to the invention, the feed control device 100 is configured to execute: evaluating the remaining feed amount based on the detection result of the preserve environment with the sensor 6; evaluating the feed intake activity of the aquatic organism in the preserve 2 based on the detection result of the preserve environment; generating a feed rate command value based on the evaluation result of the remaining feed amount and the evaluation result of the feed intake activity, and controlling the feeding device to feed at a feed rate corresponding to the feed rate command value.

In this case, the feed control device 100 calculates the feed intake score based on the evaluation result of the remaining feed amount and the evaluation result of the feed intake activity, and calculates the feed rate command value such that the feed intake score follows the target score.

The feeding system 3 may further include a management device 200. The management device 200 can communicate with the feed control device 100 of the plurality of feeding devices 4 via a network, such as a local area network, to generate a feeding plan for each of the plurality of preserves 2. The feed control device 100 controls the feeding machine 5 so that the feeding performance in the corresponding preserve 2 does not deviate significantly from the feeding plan.

According to the invention, the management device 200 calculates a feed rate target value corresponding to time based on a feed pattern representing a relationship between elapsed time from feed start time to feed end time and the feed rate, for each day. In this case, the feed control device 100 corrects the feed rate command value calculated as described above based on the feed rate target value.

The management device 200 may be further configured to change the feed start time in accordance with the sunrise time and change the feed end time in accordance with the sunset time, and calculate the feed rate target value in accordance with the time based on the feed pattern in which the feed start time is changed in accordance with the sunrise time and the feed end time is changed in accordance with the sunset time.

In addition, the management device 200 **is** configured to further execute: evaluating a weight of the aquatic organism for each of the plurality of preserves 2; and calculating a daily feed amount target value based on an evaluation result of the weight of the aquatic organism, and calculate a feed rate target value in accordance with time based on the feed amount target value and the feed pattern.

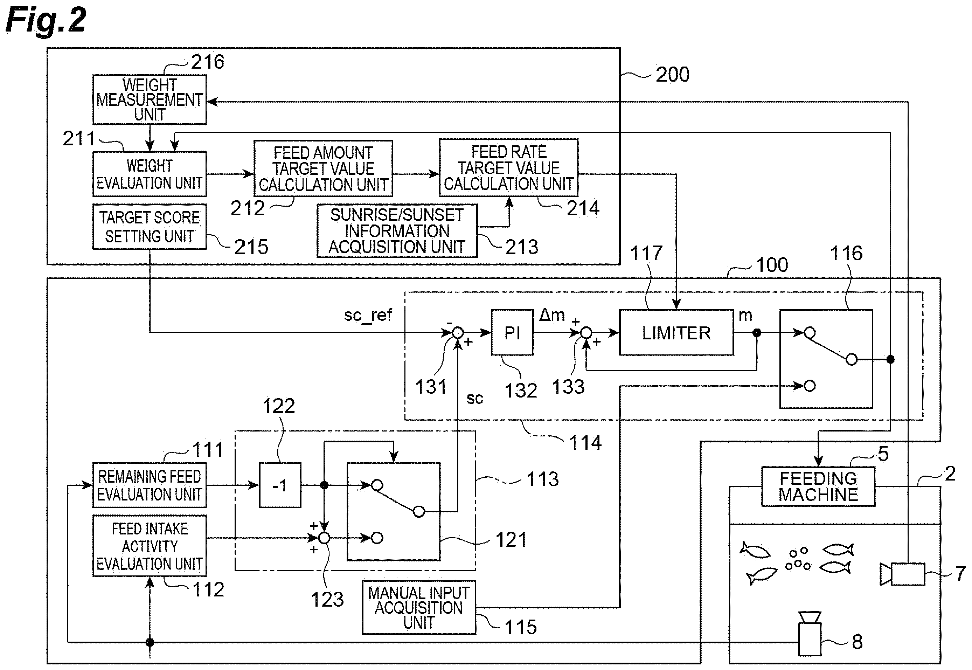

FIG. 2 is a schematic diagram illustrating the configuration of the feed control device 100 and the management device 200. For example, as illustrated in FIG. 2, the feed control device 100 includes a remaining feed evaluation unit 111, a feed intake activity evaluation unit 112, a score calculation unit 113, and a speed control unit 114 as functional configurations (hereinafter referred to as "functional blocks").

The remaining feed evaluation unit 111 evaluates the remaining feed amount based on the detection result of the preserve environment with the sensor 6. For example, the remaining feed evaluation unit 111 evaluates the remaining feed amount based on an image taken by the underwater camera 8. For example, the remaining feed evaluation unit 111 recognizes grains of the feed by processing the image captured by the underwater camera 8, and calculates a numerical value indicating the number of grains of the feed as an evaluation result of the remaining feed amount. For example, the remaining feed evaluation unit 111 calculates the number of grains of the feed in the image captured by the underwater camera 8 as an evaluation result of the remaining feed amount. The remaining feed evaluation unit 111 may calculate a value acquired by executing an operation such as multiplication of the number of grains of the feed by a predetermined coefficient as the evaluation result of the remaining feed amount.

The feed intake activity evaluation unit 112 evaluates the feed intake activity of the aquatic organism in the preserve 2 based on the detection result of the preserve environment. The feed intake activity evaluation unit 112 may evaluate feed intake activity based on the image of the underwater camera 8. For example, the feed intake activity evaluation unit 112 calculates an image variation amount caused by the movement of the aquatic organism based on the image of the underwater camera 8, and evaluates the feed intake activity based on the image variation amount. For example, the feed intake activity evaluation unit 112 calculates, as an image variation amount, a mean value of variation amounts of pixel values of pixels in the image of the underwater camera 8.

As described above, the underwater camera 8 is positioned near the bottom of the preserve 2 and is directed upward. For this reason, with the underwater camera 8, it is possible to photograph the movement of the aquatic organism above the underwater camera 8. When the aquatic organism is in the vicinity of the underwater camera 8, the image variation amount due to the movement of the aquatic organism becomes large. On the other hand, when the aquatic organism is away from the underwater camera 8 and near the water surface, the image variation amount due to the movement of the aquatic organism becomes small. Since fish, which is an example of an aquatic organism, tends to intake feed near the water surface, the higher the feed intake activity, the more aquatic organism floats up to the vicinity of the water surface, and the image variation amount due to the movement of the aquatic organism becomes smaller. When the feed intake activity is low, the number of aquatic organisms in the vicinity of the underwater camera 8 increases, and thus the image variation amount due to the movement of the aquatic organisms increases.

Corresponding to this property, the feed intake activity evaluation unit 112 may evaluate the feed intake activity such that the feed intake activity decreases as the image variation amount increases. For example, the feed intake activity evaluation unit 112 may calculate, as the evaluation result of the feed intake activity, a value acquired by executing an operation such as multiplication of a predetermined coefficient on the reciprocal of the numerical value representing the image variation amount. Accordingly, as the image variation amount increases, the evaluation result of the feed intake activity decreases.

The score calculation unit 113 may calculate the feed intake score based on the evaluation result of the remaining feed amount by the remaining feed evaluation unit 111 and the evaluation result of the feed intake activity by the feed intake activity evaluation unit 112. The score calculation unit 113 may calculate the feed intake score such that a direction in which the feed intake score varies as the remaining feed amount increases is opposite to a direction in which the feed intake score varies as the feed intake activity increases.

For example, the score calculation unit 113 may calculate the feed intake score such that the feed intake score increases as the feed intake activity increases, and the feed intake score decreases as the remaining feed amount increases. As an example, the score calculation unit 113 may calculate the feed intake score by subtracting the evaluation result of the remaining feed amount from the evaluation result of the feed intake activity. The score calculation unit 113 may calculate the feed intake score by executing calculation based on weighed values of the evaluation result of the feed intake activity and the evaluation result of the remaining feed amount based on respective weighted values.

For example, as indicated by a block 122 and an addition point 123, the score calculation unit 113 adds a value acquired by multiplying the evaluation result of remaining feed amount in the remaining feed evaluation unit 111 by minus one to the evaluation result of feed intake activity in the feed intake activity evaluation unit 112 to calculate the feed intake score.

The score calculation unit 113 may calculate the feed intake score such that the feed intake score increases as the remaining feed amount increases, and the feed intake score decreases as the feed intake activity increases. As an example, the score calculation unit 113 may calculate the feed intake score by subtracting the evaluation result of the feed intake activity from the evaluation result of the remaining feed amount. The score calculation unit 113 may calculate the feed intake score by executing calculation based on weighted values of the evaluation result of the remaining feed amount and the evaluation result of the feed intake activity.

The speed control unit 114 generates a feed rate command value based on the evaluation result of the remaining feed amount by the remaining feed evaluation unit 111 and the evaluation result of the feed intake activity by the feed intake activity evaluation unit 112 and controls the feeding machine 5 to feed at a feed rate corresponding to the feed rate command value. The speed control unit 114 calculates the feed rate command value to cause the feed intake score to follow the target score. The speed control unit 114 may calculate the feed rate command value such that the feed rate command value decreases as the remaining feed amount increases and the feed rate command value increases as the feed intake activity increases.

For example, when the feed intake score is calculated such that the feed intake score increases as the feed intake activity increases and the feed intake score decreases as the remaining feed amount increases, the speed control unit 114 changes the feed rate command value in accordance with a deviation acquired by subtracting the target score from the feed intake score. Since the feed intake score decreases as the remaining feed amount increases, the deviation is shifted in the negative direction and the feed rate command value decreases. On the other hand, since the feed intake score increases as the feed intake activity increases, the deviation is shifted in the positive direction and the feed rate command value increases.

For example, as indicated by an addition point 131 and a block 132, the speed control unit 114 calculates a speed correction value Δm by executing a proportional operation, a proportional-integral operation, or a proportional-integral-derivative operation on a deviation acquired by subtracting a target score sc_ref from a feed intake score sc. The speed control unit 114 modifies a feed rate command value m by adding the speed correction value Δm to the already generated feed rate command value m as indicated by an addition point 133. Accordingly, the feed rate command value is calculated such that the feed rate command value decreases as the remaining feed amount increases and the feed rate command value increases as the feed intake activity increases.

When the feed intake score is calculated such that the feed intake score increases as the remaining feed amount increases and the feed intake score decreases as the feed intake activity increases, the speed control unit 114 changes the feed rate command value in accordance with a deviation acquired by subtracting the remaining feed score from the target score. Since the feed intake score increases as the remaining feed amount increases, the deviation is shifted in the negative direction and the feed rate command value decreases. On the other hand, since the feed intake score decreases as the feed intake activity increases, the deviation shifts in the positive direction and the feed rate command value increases.

The score calculation unit 113 may lower the influence degree of the feed intake activity with respect to the feed intake score in response to the evaluation result of the remaining feed amount exceeding the predetermined level. For example, the score calculation unit 113 includes a calculation method switching unit 121. The calculation method switching unit 121 switches between a normal state and a remaining feed priority state in which the influence degree of feed intake activity on the feed intake score is lower than that in the normal state.

For example, in the normal state, the calculation method switching unit 121 outputs an output of the addition point 123 as the feed intake score. On the other hand, in the remaining feed priority state, the calculation method switching unit 121 outputs the output of the block 122 as the feed intake score. The output of the block 122 is based solely on the evaluation result of the remaining feed amount by the remaining feed evaluation unit 111. Therefore, in the illustrated example, the influence degree of the feed intake activity with respect to the feed intake score is zero in the remaining feed priority state.

The calculation method switching unit 121 places the score calculation unit 113 in the normal state when the remaining feed amount is below a predetermined level and switches the score calculation unit 113 from the normal state to the remaining feed priority state in response to the remaining feed amount exceeding the predetermined level. When the normal state is switched to the remaining feed priority state, the value of the feed intake score becomes lower, and thus the feed rate command value becomes smaller. This reduces the remaining feed amount and when it falls below the predetermined level, the calculation method switching unit 121 switches the remaining feed priority state to the normal state.

The feed control device 100 **is** configured to further execute correcting the feed rate command value based on a pre-planned feed rate target value. For example, the speed control unit 114 may include a limiter 117. The limiter 117 limits the feed rate command value to be less than or equal to the feed rate target value calculated by the management device 200. For example, the limiter 117 changes the feed rate command value m to the same value as the feed rate target value if the feed rate command value m modified by the speed correction value Δm exceeds the feed rate target value. If the feed rate command value m modified by the speed correction value Δm is below the feed rate target value, the limiter 117 does not change the feed rate command value m. With the limiter 117, when the feed rate target value is zero, the feed rate command value is zero.

The process of correcting the feed rate command value based on the feed rate target value is not necessarily limited to the limiting process exemplified as the limiter 117. For example, the feed control device 100 may calculate a mean value of the feed rate command value m modified by the speed correction value Δm and the feed rate target value and change the feed rate command value m value to the mean value. In the calculation of the mean value, the feed control device 100 may give a predetermined weight to each of the feed rate command value m and the feed rate target value.

The feed control device 100 may be configured to change the feed rate command value even by manual operation. For example, the feed control device 100 may further include a manual input acquisition unit 115 and an automatic/manual switching unit 116. The manual input acquisition unit 115 acquires a feed rate command value determined by manual operation. The manual input acquisition unit 115 may acquire, from the management device 200, a feed rate command value that is manually input to a user interface 295 of the management device 200 described below. The automatic/manual switching unit 116 switches between an automatic mode in which the feeding machine 5 is controlled based on the feed rate command value calculated by the speed control unit 114 and a manual mode in which the feeding machine 5 is controlled based on the feed rate command value acquired by the manual input acquisition unit 115. In manual mode, the speed control unit 114 controls the feeding machine 5 based on the feed rate command value acquired by the manual input acquisition unit 115.

The automatic/manual switching unit 116 may acquire, from the management device 200, a switching command that is manually input to the user interface 295 of the management device 200 described later, and switch between the automatic mode and the manual mode in accordance with the acquired switching command.

The management device 200 includes a weight measurement unit 216, a weight evaluation unit 211, a feed amount target value calculation unit 212, a sunrise/sunset information acquisition unit 213, a feed rate target value calculation unit 214, and a target score setting unit 215 as illustrated in FIG. 2.

The weight measurement unit 216 measures the weight of the aquatic organism. Measuring the weight of the aquatic organism means measuring the weight of at least one aquatic organism in the preserve 2, and also includes measuring the total weight of the aquatic organisms in the preserve 2. In addition, measuring the weight of the aquatic organism includes estimating, after measuring a value showing a certain degree of correlation with the weight of the aquatic organism, the weight of the aquatic organism based on the measurement result of the value.

As an example, the weight measurement unit 216 measures the size of the aquatic organism in the image and the distance to the aquatic organism based on the image captured by the underwater camera 7 described above, and estimates the weight per one aquatic organism based on the measurement result. The weight measurement unit 216 may count the population of aquatic organisms in the preserve 2 based on the image captured by the underwater camera 7, and estimate the total weight of the aquatic organisms in the preserve 2 based on the estimation result of the weight per one aquatic organism and the count result of the population. The weight measurement unit 216 may repeat the measurement of the weight of the aquatic organism in a predetermined measurement cycle.

The weight evaluation unit 211 evaluates the weight of aquatic organisms. Evaluating the weight of the aquatic organism includes measuring the weight of the aquatic organism and estimating the weight of the aquatic organism based on past data. Evaluating the weight of the aquatic organism includes evaluating the weight per one aquatic organism and evaluating the total weight of the aquatic organisms.

For example, as an example of evaluating the weight of the aquatic organism, the weight evaluation unit 211 may execute: acquiring a measurement result of the weight of the aquatic organism; evaluating a feed intake amount from a measurement timing of the weight of the aquatic organism to an evaluation target timing based on a feed rate; estimating a weight increase rate of the aquatic organism from the measurement timing to the evaluation target timing based on the evaluation result of the feed intake amount; and estimating the weight of the aquatic organism at the evaluation target timing based on the measurement result of the weight of the aquatic organism and the estimation result of the weight increase rate of the aquatic organism. As an example of the measurement result of the weight of the aquatic organism, the weight evaluation unit 211 may acquire a measurement result of the weight of the aquatic organism measured by the weight measurement unit 216. The increase rate is a non-dimensional value representing the degree of increase by ratio. The increase rate may be a ratio of an increase amount to an amount before the increase or may be a ratio of an increase amount to an amount after the increase. For example, the weight increase rate may be a ratio of the weight increase amount to the weight before the increase, or may be a ratio of the weight increase amount to the weight after the increase.

The method of measuring the weight of the aquatic organism is not limited to the above-described measurement based on the image captured by the underwater camera 7. The weight evaluation unit 211 may acquire a measurement result of the weight directly executed by taking up one or more aquatic organisms.

The weight evaluation unit 211 may further execute estimating the population of the aquatic organisms at the evaluation target timing further based on a predicted rate of decrease of the population of aquatic organisms. In this case, the weight evaluation unit 211 may estimate the total weight of the aquatic organisms at the evaluation target timing further based on the predicted reduction rate of the population of the aquatic organisms.

For example, the weight evaluation unit 211 may acquire the measurement result of the weight per one aquatic organism from the weight measurement unit 216, estimate the weight per one aquatic organism at the evaluation target timing based on the measurement result of the weight per one aquatic organism and the estimation result of the weight increase rate of the aquatic organism, and estimate the total weight of the aquatic organisms at the evaluation target timing based on the estimation result of the weight per one aquatic organism and the estimation result of the population.

In estimating the population of the aquatic organisms, the weight evaluation unit 211 may estimate the population of the aquatic organisms at the evaluation target timing based on the population measured before being put into the preserve 2 and the predicted reduction rate. More particularly, the weight evaluation unit 211 may estimate a reduced number of individuals until the evaluation target timing based on the population, the predicted reduction rate, and an elapsed time from the measurement timing to the evaluation target timing, and may estimate the population of the aquatic organism at the evaluation target timing by subtracting an estimation result of the reduced number from the measured population.

The feed amount target value calculation unit 212 calculates a daily feed amount target value based on the evaluation result of the weight of the aquatic organism. For example, the feed amount target value calculation unit 212 may calculate the feed amount target value by multiplying the total weight by a predetermined target feed proportion. The feed proportion is a ratio of the daily feed amount to the total weight of the aquatic organism. The target feed proportion is a target value of the feed proportion.

The feed amount target value calculation unit 212 may specify, based on a feed proportion profile representing a relationship between dates and the feed proportion and a target date on which the feed amount target value is to be calculated, a target feed proportion on the target date, and calculate the feed amount target value by multiplying the total weight by the specified target feed proportion.

The sunrise/sunset information acquisition unit 213 acquires the information of the sunrise/sunset time. For example, the sunrise/sunset information acquisition unit 213 acquires sunrise/sunset time information via a wide area network from an information site that discloses the sunrise/sunset time information. The information of the sunrise/sunset time may be stored in the management device 200 in advance. In this case, the sunrise/sunset information acquisition unit 213 acquires the information of the sunrise/sunset time based on the data stored in the management device 200.

The feed rate target value calculation unit 214 calculates a feed rate target value in accordance with time based on a feed pattern representing a relationship between an elapsed time and a feed rate from a feed start time to a feed end time. The feed pattern may represent at least a relative change in the feed rate in accordance with a change in time, and may not represent the magnitude of the feed rate at each time. In this case, in order to determine the feed rate target value in accordance with time based on the feed pattern, additional information is required.

The feed rate target value calculation unit 214 may calculate the feed rate target value in accordance with the time based on the feed amount target value and the feed pattern by using the daily feed amount target value as the additional information. For example, the feed rate target value calculation unit 214 calculates the feed rate target value in accordance with the time so that the total feed amount from the feed start time to the feed end time according to the feed pattern matches the feed amount target value. For example, the feed rate target value calculation unit 214 may express the feed rate of each time as a ratio to the total feed amount of one day based on the feed pattern, and may calculate the feed rate target value of each time by multiplying the feed amount target value by the ratio of each time.

The feed rate target value calculation unit 214 may change the feed start time of the feed pattern in accordance with the sunrise time, change the feed end time of the feed pattern in accordance with the sunset time, and calculate the feed rate target value in accordance with the time based on the changed feed pattern.

By changing the feed start time and the feed end time, the time from the start of feeding to the end of feeding also changes. Hereinafter, this time is referred to as "feeding time", the feeding time before the feed start time and the feed end time are changed is referred to as "feeding time before change", and the feeding time after the feed start time and the feed end time are changed is referred to as "feeding time after change". The feed rate target value calculation unit 214 may expand or reduce the entire feed pattern in the time axis direction by a ratio of the changed feeding time to the feeding time before the change.

The feed rate target value calculated by the feed rate target value calculation unit 214 is used to correct the feed rate command value in the feed control device 100, as described above. When the feed rate command value is suppressed to be equal to or less than the feed rate target value as in a case where the process of correcting the feed rate command value based on the feed rate target value is the above-described limiting process, the actual value of the feed amount in one day is always suppressed to be equal to or less than the feed amount target value. In order to avoid this, the feed rate target value calculation unit 214 may enlarge the feed rate target value calculated based on the feed amount target value and the feed pattern by multiplication of a predetermined magnification or the like.

The target score setting unit 215 sets the target score described above for the feed intake score. The target score setting unit 215 may change the feed intake score based on user input. For example, when the position of the line indicating the target score is changed by the user in a feed intake score graph 400 to be described later, the target score setting unit 215 may set the target score in response thereto.

The management device 200 may be further configured to display the feed pattern described above on the user interface. The management device 200 may be configured to change the feed pattern based on an editing input for the feed pattern displayed on the user interface.

The management device 200 may be further configured to execute: storing the feed pattern displayed on the user interface based on a save command input; and reading out the stored feed pattern and displaying the feed pattern on the user interface based on the load command input. The management device 200 may be further configured to execute: allocating a stored feed pattern to a shortcut object (e.g., a shortcut button) on the user interface based on an allocation command input; and reading and the stored feed pattern and displaying the feed pattern on the user interface in response to an operation of the shortcut object.

Further, the management device 200 may be configured to further execute displaying the feed proportion profile described above on the user interface. The management device 200 may be configured to modify the feed proportion profile based on an editing input to the feed proportion profile displayed on the user interface.

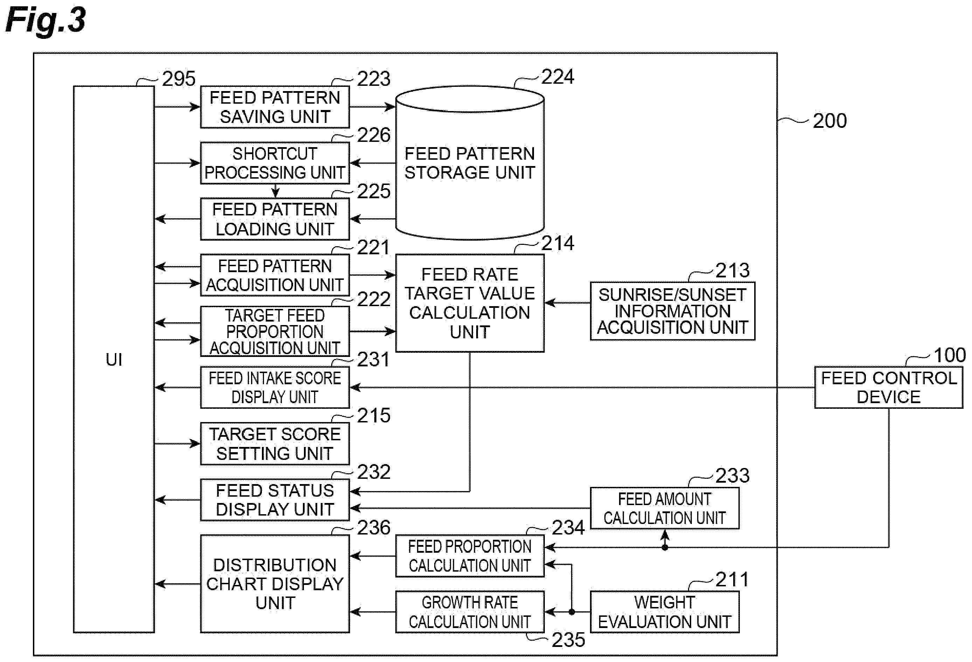

For example, as illustrated in FIG. 3, the management device 200 includes a feed pattern acquisition unit 221, a target feed proportion acquisition unit 222, a feed pattern saving unit 223, a feed pattern storage unit 224, a feed pattern loading unit 225, and a shortcut processing unit 226.

The feed pattern acquisition unit 221 displays a feed pattern input window on the user interface 295 described below, and acquires a feed pattern based on an input to the feed pattern input window. For example, the feed pattern acquisition unit 221 may display a feed pattern in the feed pattern input window and change the feed pattern based on an editing input for the feed pattern displayed in the feed pattern input window. When the feed pattern acquisition unit 221 changes the feed pattern, the feed rate target value calculation unit 214 calculates the feed rate target value in accordance with the time based on the feed pattern after change.

The feed pattern acquisition unit 221 may display the sunrise time and the sunset time together with the feed pattern in the feed pattern input window. The feed pattern acquisition unit 221 may display a correspondence relationship between elapsed time and sunrise time and sunset time in the feed pattern in the feed pattern input window.

The target feed proportion acquisition unit 222 displays a feed proportion input window on the user interface 295 described below, and acquires a feed proportion profile based on input to the feed proportion input window. For example, the target feed proportion acquisition unit 222 may display the feed proportion profile in the feed proportion input window and change the feed proportion profile based on an editing input for the feed proportion profile displayed in the feed proportion input window. When the target feed proportion acquisition unit 222 changes the feed proportion profile, the feed amount target value calculation unit 212 specifies the feed proportion profile of the date for which the feed amount target value is to be calculated, based on the changed feed proportion profile.

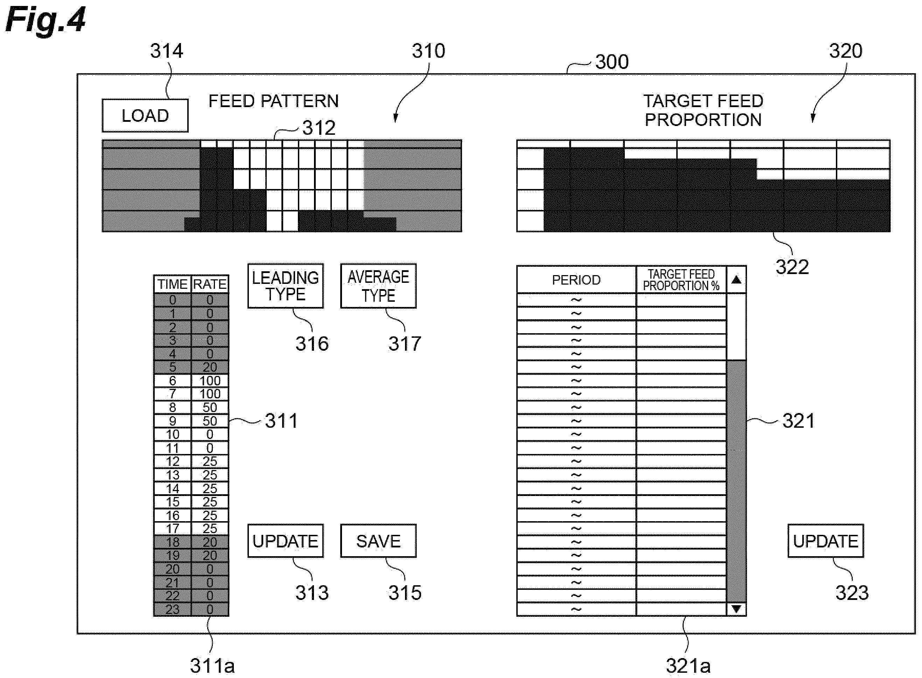

FIG. 4 is a diagram illustrating a planning window acquired by integrating the feed pattern input window and the feed proportion input window. The feed pattern acquisition unit 221 and the target feed proportion acquisition unit 222 display a planning window 300 illustrated in FIG. 4 for one preserve 2 which is an input target of the feed pattern and the feed proportion profile among the plurality of preserves 2.

The planning window 300 includes a feed pattern input window 310 and a feed proportion input window 320. The planning window 300 includes a numerical value input part 311, a feed pattern display part 312, an update button 313, a load button 314, a save button 315, and shortcut buttons 316, 317.

The numerical value input part 311 includes a plurality of numerical input boxes 311a for each time of day. The feed pattern acquisition unit 221 displays the input numerical value for the plurality of numerical input boxes 311a. As described later, the numerical value displayed on the plurality of numerical input boxes 311a is acquired as the feed pattern. Therefore, displaying the input numerical value for the plurality of numerical input boxes 311a corresponds to an example of displaying the input feed pattern.

The feed pattern display part 312 displays the feed pattern displayed on the numerical value input part 311 as a graph. For example, the feed pattern display part 312 displays the feed pattern by a graph in which the horizontal axis represents elapsed time and the vertical axis represents the relative magnitude of feed rate. The feed pattern acquisition unit 221 changes the color of an area corresponding to a time zone from sunrise time to sunset time and an area corresponding to other time zones in the feed pattern display part 312. As a result, the corresponding relationship between elapsed time in the feed pattern and sunrise time and sunset time is displayed on the feed pattern display part 312.

The update button 313 is a button for instructing to update the feed pattern based on the input to the numerical value input part 311. When the update button 313 is operated (for example, is clicked), the feed pattern acquisition unit 221 changes the feed pattern based on the numerical value displayed on the plurality of numerical input boxes 311a. For example, the feed pattern acquisition unit 221 acquires, as the feed pattern after change, a feed pattern in which the numerical values displayed on the plurality of numerical input boxes 311 a are associated with a plurality of times in the same correspondence relationship as displayed on the numerical value input part 311.

The save button 315 is a button for executing a save command input for instructing to save the feed pattern displayed on the numerical value input part 311 and the feed pattern display part 312. The load button 314 is a button for executing load command input for instructing to read out the stored feed pattern. The shortcut buttons 316, 317 are buttons for instructing to read out a stored feed pattern allocated in advance.

The feed proportion input window 320 includes a numerical value input part 321, a feed proportion profile display unit 322, and an update button 323. The numerical value input part 321 includes a plurality of numerical input boxes 321a for each period of predetermined duration. Each period is specified by, for example, a start date and an end date. The target feed proportion acquisition unit 222 displays the entered numerical values for each the plurality of numerical input boxes 321a. As described below, the numerical values displayed in the plurality of numerical input boxes 321a are acquired as a feed proportion profile. Thus, displaying the entered numerical values to the plurality of numerical input boxes 321a corresponds to an example of displaying the entered feed proportion profile.

The feed proportion profile display unit 322 displays the feed proportion profile displayed on the numerical value input part 321 as a graph. For example, the feed proportion profile display unit 322 displays the feed proportion profile by a graph in which the horizontal axis represents elapsed time and the vertical axis represents the magnitude of the feed proportion.

The update button 323 is a button for instructing to update the feed proportion profile based on input to the numerical value input part 321. When the update button 323 is operated (e.g., is clicked), the target feed proportion acquisition unit 222 changes the feed proportion profile based on the numerical values displayed on the plurality of numerical input boxes 321a. For example, the target feed proportion acquisition unit 222 acquires, as the changed feed proportion profile, a feed proportion profile in which the numerical values displayed on the plurality of numerical input boxes 321a are associated with a plurality of periods in the same correspondence relationship as that displayed on the numerical value input part 321.

Referring back to FIG. 3, the feed pattern saving unit 223 stores the feed pattern displayed on the user interface in the feed pattern storage unit 224 based on the save command input. For example, the feed pattern saving unit 223 stores the feed pattern displayed in the numerical value input part 311 and the feed pattern display part 312 in the feed pattern storage unit 224 in response to a save command input by an operation (for example, clicking) of the save button 315.

The feed pattern loading unit 225 reads the stored feed pattern based on the load command input and displays the feed pattern on the user interface. For example, the feed pattern loading unit 225 displays a selection window of the stored feed pattern in response to a load command input by an operation (for example, click) of the load button 314, reads the selected feed pattern from the feed pattern storage unit 224, and displays the feed pattern in the numerical value input part 311 and the feed pattern display part 312.

The shortcut processing unit 226 allocates the stored feed pattern to the shortcut object of the user interface based on an allocation command input. For example, the shortcut processing unit 226 displays a selection window of the stored feed pattern in response to an allocation command input by a secondary-operation (for example, right click) on the shortcut buttons 316, 317, and allocates the selected feed pattern to the shortcut buttons 316, 317.

In response to the operation of the shortcut object, the shortcut processing unit 226 reads out the stored feed pattern and displays it on the user interface. For example, in response to a primary-operation (for example, left click) on the shortcut buttons 316, 317, the shortcut processing unit 226 causes the feed pattern loading unit 225 to read the feed pattern allocated to the shortcut buttons 316, 317 from the feed pattern storage unit 224 and display it on the numerical value input part 311 and the feed pattern display part 312.

The management device 200 may be configured to display the feed intake score on the user interface, may be configured to display the current feed rate for each of the plurality of preserves 2 on the user interface, and may be configured to display the feed proportion and the increase rate of the total weight of the aquatic organism for each of the plurality of preserves 2 on the user interface. The management device 200 may be configured to display on the user interface an achievement rate for the feed amount target value in addition to the feed rate.

For example, the management device 200 may further include a feed intake score display unit 231, a feed amount calculation unit 233, a feed status display unit 232, a feed proportion calculation unit 234, a growth rate calculation unit 235, and a distribution chart display unit 236. The feed intake score display unit 231 displays the feed intake score on the user interface. The feed intake score display unit 231 may cause the user interface to display the target score together with the feed intake score. For example, the feed intake score display unit 231 displays a feed intake score for each of the plurality of preserves 2 as a graph and displays a line representing a target score in the graph.

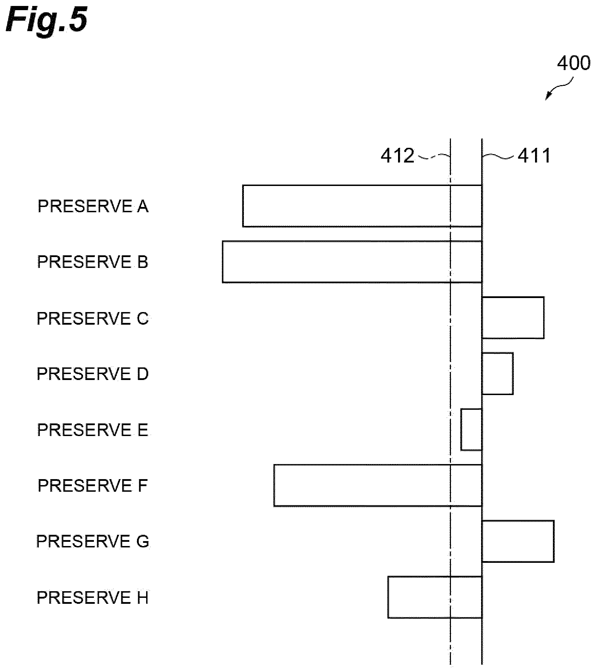

FIG. 5 is a diagram illustrating a display screen of the feed intake score. The feed intake score graph 400 illustrated in FIG. 5 is a bar graph representing the feed intake score for each of the plurality of preserves 2. In the feed intake score graph 400, a plurality of bar graphs respectively representing feed intake scores of the plurality of preserves 2 are arranged along the vertical direction. The feed intake score display unit 231 extends the corresponding bar graph leftward from a zero line 411 as the feed intake score increases in the negative direction, and extends the corresponding bar graph rightward from the zero line 411 as the feed intake score increases in the positive direction.

The feed intake score display unit 231 displays a target line 412 parallel to the zero line 411 in the feed intake score graph 400. When an operation (for example, a drag operation) for changing the position of the target line 412 is executed in the feed intake score graph 400, the feed intake score display unit 231 changes the display position of the target line 412 in accordance with the operation. In response to this, the target score setting unit 215 changes the target score based on the changed position of the target line 412.

The feed amount calculation unit 233 calculates a feed amount actual value by integrating the feed rate command value in the feed control device 100. The feed status display unit 232 displays the current feed rate for each of the plurality of preserves 2 on the user interface. The feed status display unit 232 may further display an achievement rate for the feed amount target value on the user interface for each of the plurality of preserves 2.

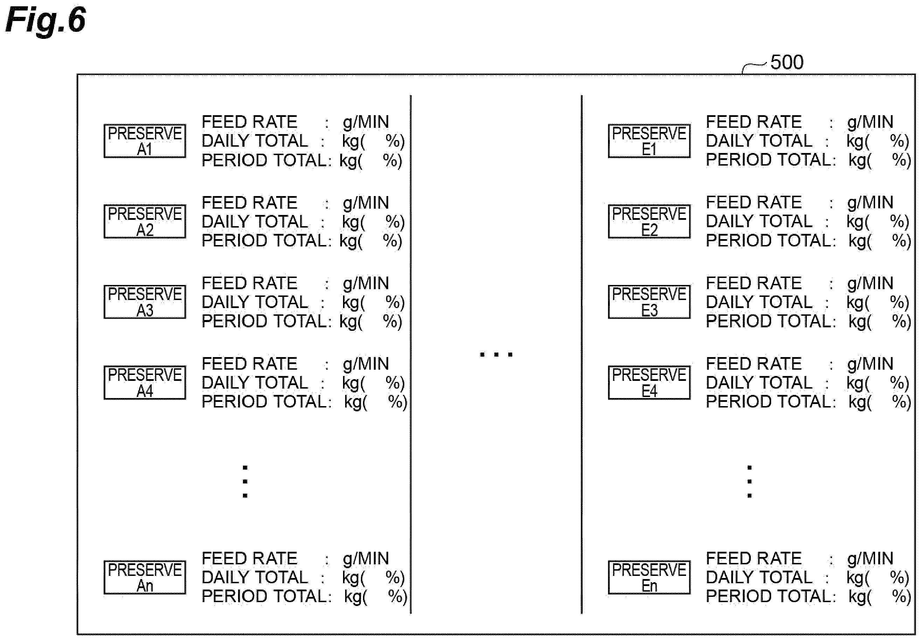

The feed status display unit 232 may numerically or graphically indicate the feed rate and achievement rate for each of the plurality of preserves 2. A status window 500 illustrated in FIG. 6 is an example of a window displayed by the feed status display unit 232. The feed status display unit 232 displays, in the status window 500, an identification information of the preserve 2, the feed rate [g/min], a daily total [kg] which is a feeding amount actual value on the date to which the current time belongs, and a period total [kg] which is a feeding amount actual value in a period to which the current time belongs are displayed for each of the plurality of preserves 2. The feed status display unit 232 displays a ratio [%] of the daily total to the feed amount target value on the date as an example of the achievement rate. Further, the feed status display unit 232 displays a ratio [%] of the period total to the total feed amount target value in the period as an example of the achievement rate.

The feed proportion calculation unit 234 calculates the actual value of the daily feed proportion each time feeding from the feed start time to the feed end time is completed. The growth rate calculation unit 235 calculates an increase rate of the total weight every time the weight is measured by the weight measurement unit 216. For example, the growth rate calculation unit 235 calculates the increase rate of the total weight per day based on the amount of increase from the total weight based on the previous measurement result to the total weight based on the current measurement result and the period from the previous measurement to the current measurement.

The distribution chart display unit 236 displays the feed proportion and the increase rate of the total weight of the aquatic organism on the user interface for each of the plurality of preserves 2. For example, the distribution chart display unit 236 displays a distribution chart in which a feed proportion calculated by the feed proportion calculation unit 234 and an increase rate calculated by the distribution chart display unit 236 are mapped for each of the plurality of preserves 2 in a coordinate having a first coordinate axis representing the magnitude of the feed proportion and a second coordinate axis representing the magnitude of the increase rate. The distribution chart display unit 236 may further display a plurality of contour lines representing a relationship between the feed proportion and the increase rate in the distribution chart for each feed conversion ratio representing a ratio of the feed proportion to the increase rate (a plurality of contour lines of the feed conversion ratio may be displayed in the distribution chart).

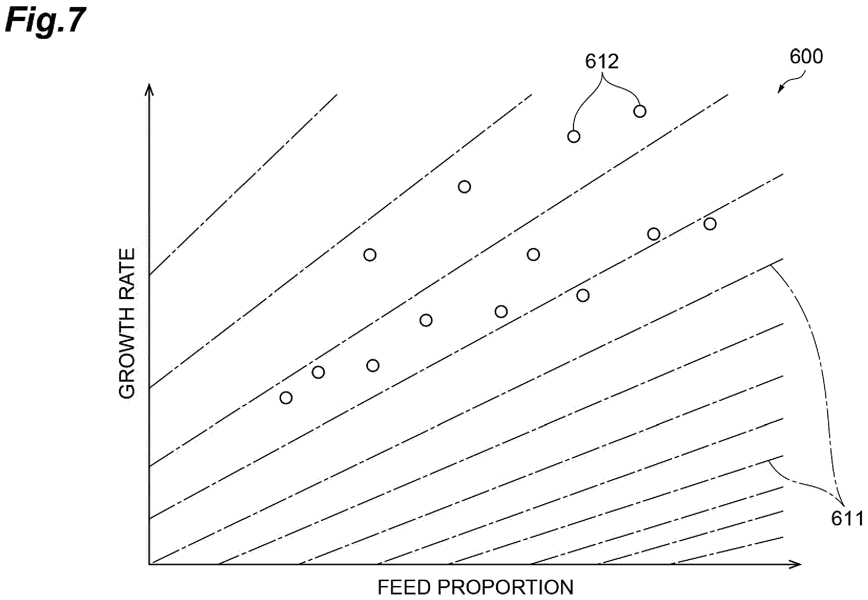

FIG. 7 is a diagram illustrating an example distribution chart displayed by the feed proportion calculation unit 234. A distribution chart 600 illustrated in FIG. 7 includes a coordinate having a horizontal axis (first coordinate axis) representing the magnitude of the feed proportion and a vertical axis (second coordinate axis) representing the magnitude of the increase rate. The distribution chart display unit 236 maps a plurality of data points 612 representing the feed proportion and the increase rate for each of the plurality of preserves 2 to the coordinate of the distribution chart 600. Further, the distribution chart display unit 236 displays a plurality of contour lines 611 on the distribution chart 600. According to the distribution chart display unit 236, it is possible to display the magnitude of the feed conversion ratio in each of the preserves 2 in an readily understandable manner while displaying the magnitude of the feed proportion and the increase rate in each of the preserves 2 in an readily understandable manner.

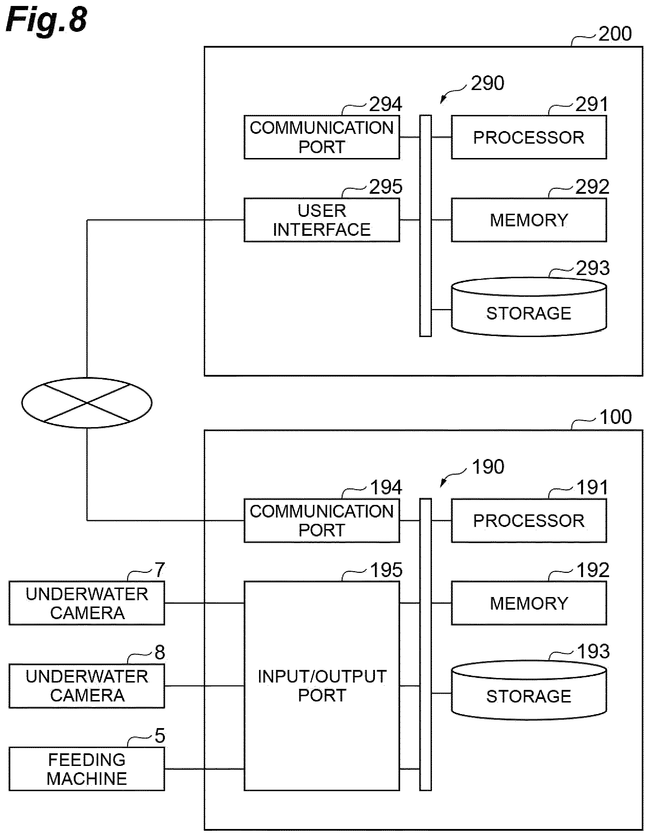

FIG. 8 is a diagram illustrating hardware configurations of the feed control device 100 and the management device 200. As illustrated in FIG. 8, the management device 200 includes circuitry 290. The circuitry 290 includes one or more processors 291, a memory 292, storage 293, a communication port 294, and the user interface 295. The storage 293 stores a program for causing the management device 200 to calculate a feed rate target value in accordance with time based on a feed pattern representing a relationship between elapsed time from the feed start time to the feed end time and the feed rate in a storage medium. For example, the storage 293 stores a program that causes the management device 200 to configure the above-described functional blocks. Specific examples of the storage medium constituting the storage 293 include a nonvolatile semiconductor memory and a hard disk.

The memory 292 temporarily stores the program loaded from the storage 293 in a storage medium. Specific examples of the storage medium constituting the memory 292 include a random-access memory (RAM). The one or more processors 291 process information corresponding to the program loaded into the memory 292 and configure each functional block. Intermediate calculation results generated by processing information by the one or more processors 291 are temporarily stored in the memory 292.

The communication port 294 communicates with the feed control device 100 in response to commands from the one or more processors 291. The user interface 295 includes a display device such as a liquid crystal monitor and input devices such as a keyboard and a mouse. The user interface 295 notifies the one or more processors 291 of an input to the input device and displays an interface image on the display device in response to a command from the one or more processors 291. In the user interface 295, the input devices may be incorporated into a display device like a so-called touch panel.

### Feeding Method

Next, as an example of the feeding method, a feeding procedure executed by the feeding system 3 will be illustrated in detail. The procedure includes a feed proportion profile acquisition procedure, a feed pattern acquisition procedure, a weight evaluation procedure, a generation procedure of feed rate target value, an automatic feed control procedure, a manual feed control procedure, a displaying procedure of the feed intake score, a displaying procedure of the feed status, and a displaying procedure of the distribution chart. Hereinafter, each procedure will be described in detail.

### Feed Proportion Profile Acquisition Procedure

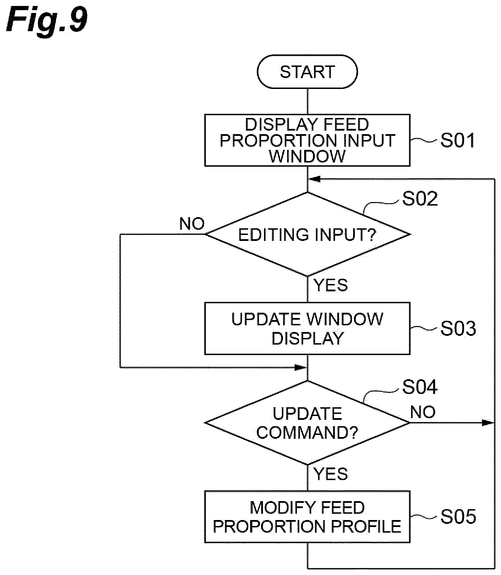

This procedure is executed by the management device 200 when a feed planning function is invoked by the user interface 295. As illustrated in FIG. 9, the management device 200 first executes steps S01 and S02.

In step S01, the target feed proportion acquisition unit 222 displays a feed proportion input window on the user interface 295. For example, the target feed proportion acquisition unit 222 displays the above-described planning window 300 on the user interface 295. At this time, the target feed proportion acquisition unit 222 may display the latest acquired feed proportion profile on the numerical value input part 321 and the feed proportion profile display unit 322. If there is no acquired feed proportion profile, the target feed proportion acquisition unit 222 may display a predetermined initial profile on the numerical value input part 321 and the feed proportion profile display unit 322.

In step S02, the target feed proportion acquisition unit 222 checks whether there is an editing input to the feed proportion profile displayed on the feed proportion input window 320. If it is determined in step S02 that there is an editing input, the management device 200 executes step S03. In step S03, the target feed proportion acquisition unit 222 updates the numerical value input part 321 and the feed proportion profile display unit 322 according to the editing input.

Next, the management device 200 executes step S04. If it is determined in step S02 that there is no editing input, the management device 200 executes step S04 without executing step S03. In step S04, the target feed proportion acquisition unit 222 checks whether there is an update command input by operation of the update button 323. If it is determined in step S04 that there is no update command input, the management device 200 returns the processing to step S02.

If it is determined in step S04 that there is an update command input, the management device 200 executes step S05. In step S05, the target feed proportion acquisition unit 222 modifies the feed proportion profile based on the numerical values displayed on the plurality of numerical input boxes 321a.

The management device 200 then returns the processing to the step S02. Thereafter, the management device 200 repeats steps S02 to S05 until the planning window 300 is closed. The management device 200 executes the above procedure for each of the plurality of preserves 2.

### Feed Pattern Acquisition Procedure

This procedure is also executed by the management device 200 when the feeding planning function described above is invoked. This procedure includes displaying the feed pattern on the user interface. The procedure may further include displaying a sunrise time and a sunset time together with the feed pattern on the user interface, and may further include modifying the feed pattern based on an editing input for the feed pattern displayed on the user interface.

In addition, the procedure may further include: storing the feed pattern displayed on the user interface based on the save command input; and reading the stored feed pattern based on the load command input and displaying the same on the user interface. The procedure may further include: allocating the stored feed pattern to a shortcut object of the user interface based on the allocation command input; and reading and displaying the stored feed pattern on the user interface in response to an operation of the shortcut object.

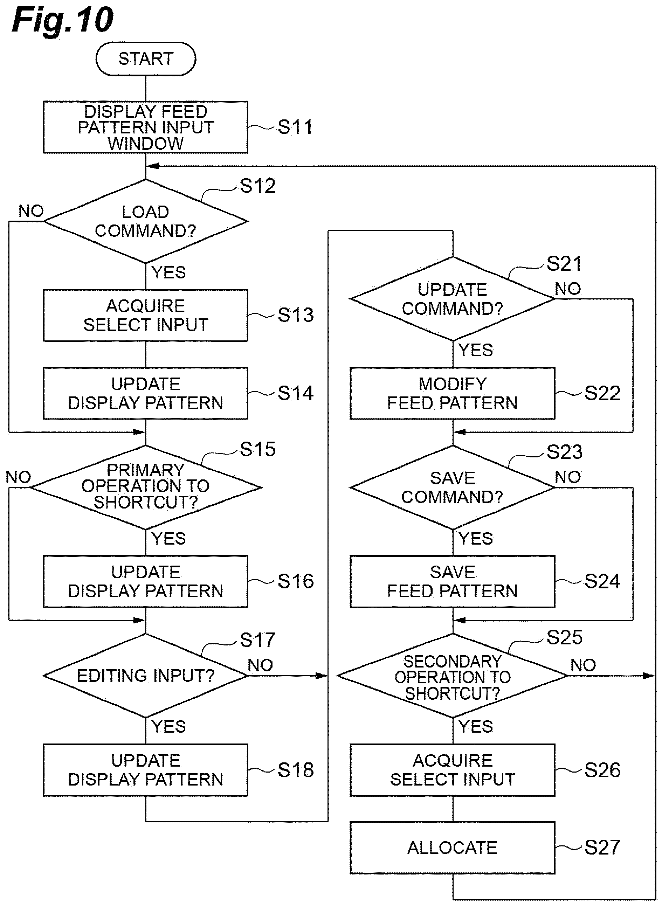

As illustrated in FIG. 10, the management device 200 executes steps S11 and S12. In step S11, the feed pattern acquisition unit 221 displays the feed pattern input window on the user interface 295. For example, the feed pattern acquisition unit 221 displays the above-described planning window 300 on the user interface 295. At this time, the feed pattern acquisition unit 221 may display the acquired latest feed pattern on the numerical value input part 311 and the feed pattern display part 312. If there is no acquired feed pattern, the feed pattern acquisition unit 221 may display a predetermined initial pattern on the numerical value input part 311 and the feed pattern display part 312.

In step S12, the feed pattern loading unit 225 checks whether there is a load command input by an operation of the load button 314. If it is determined in step S12 that there is a load command input, the management device 200 executes steps S13 and S14.

In step S13, the feed pattern loading unit 225 displays a selection screen of the stored feed pattern. In step S14, the feed pattern loading unit 225 reads out the selected feed pattern from the feed pattern storage unit 224 and displays it in the numerical value input part 311 and the feed pattern display part 312.

Next, the management device 200 executes step S15. If it is determined in step S12 that there is no load command input, the management device 200 executes step S15 without executing steps S13 and S14. In step S15, the shortcut processing unit 226 checks whether there is a primary-operation on the shortcut buttons 316, 317. If it is determined in step S15 that there is a primary-operation on the shortcut buttons 316, 317, the management device 200 executes step S16. In step S16, the shortcut processing unit 226 reads the feed pattern assigned to the shortcut buttons 316, 317 from the feed pattern storage unit 224 and displays it to the numerical value input part 311 and the feed pattern display part 312.

Next, the management device 200 executes step S17. If it is determined in step S15 that there is no primary-operation on the shortcut buttons 316, 317, the management device 200 executes step S17 without executing step S16. In step S17, the feed pattern acquisition unit 221 checks whether there is an editing input with respect to the feed pattern displayed on the feed pattern input window 310. If it is determined in step S17 that there is an editing input, the management device 200 executes step S18. In step S18, the feed pattern acquisition unit 221 updates the numerical value input part 311 and the feed pattern display part 312 according to the editing input.

Next, the management device 200 executes step S21. If it is determined in step S17 that there is no editing input, the management device 200 executes step S21 without executing step S18. In step S21, the feed pattern acquisition unit 221 checks whether there is an update command input by operation of the update button 313. If it is determined in step S21 that there is an update command input, the management device 200 executes step S22. In step S22, the feed pattern acquisition unit 221 changes the feed proportion profile based on the numerical values displayed on the plurality of numerical input boxes 321a.

Next, the management device 200 executes step S23. If it is determined in step S21 that there is no update command input, the management device 200 executes step S23 without executing step S22. In step S23, it is checked whether there is a save command input by an operation of the save button 315. If it is determined in step S23 that there is a save command input, the management device 200 executes step S24. In step S24, the feed pattern saving unit 223 stores the feed pattern displayed in the numerical value input part 311 and the feed pattern display part 312 in the feed pattern storage unit 224.

Next, the management device 200 executes step S25. If it is determined in step S23 that there is no save command input, the management device 200 executes step S25 without executing step S24. In step S25, the shortcut processing unit 226 checks whether there is an allocation command input due to a secondary-operation of the shortcut buttons 316, 317. If it is determined in step S25 that there is an allocation command input, the management device 200 executes steps S26 and S27. In step S26, the shortcut processing unit 226 displays a selection screen of the stored feed pattern. In step S27, the shortcut processing unit 226 assigns the selected feed pattern to the shortcut buttons 316, 317.

The management device 200 then returns to the step S12. If it is determined in step S25 that there is no allocation command input, the management device 200 returns the processing to step S12 without executing steps S26 and S27. Thereafter, the management device 200 repeats steps S11 to S27 until the planning window 300 is closed. The management device 200 executes the above procedure for each of the plurality of preserves 2.

### Weight Evaluation Procedure

The procedure includes: measuring the weight of aquatic organism; evaluating the feed intake amount from the measurement timing of the weight of the aquatic organism to the evaluation target timing based on the feed rate; estimating the weight increase rate of the aquatic organism from the measurement timing to the evaluation target timing based on the evaluation result of the feed intake amount; and estimating the weight of the aquatic organism at the evaluation target timing based on the measurement result of the total weight of the aquatic organism and the estimation result of the weight increase rate of the aquatic organism. The procedure may further include estimating a population of the aquatic organism at the evaluation target timing based on the population of the aquatic organism entered into the preserve 2, and a total weight of the aquatic organism at the evaluation target timing may be estimated further based on an estimation result of the population of the aquatic organism at the evaluation target timing. For example, the weight per one aquatic organism at the evaluation target timing may be estimated based on the measurement result of the weight per one aquatic organism and the estimation result of the weight increase rate of the aquatic organism, and the total weight of the aquatic organism at the evaluation target timing may be estimated based on the estimation result of the weight per one aquatic organism and the estimation result of the population.

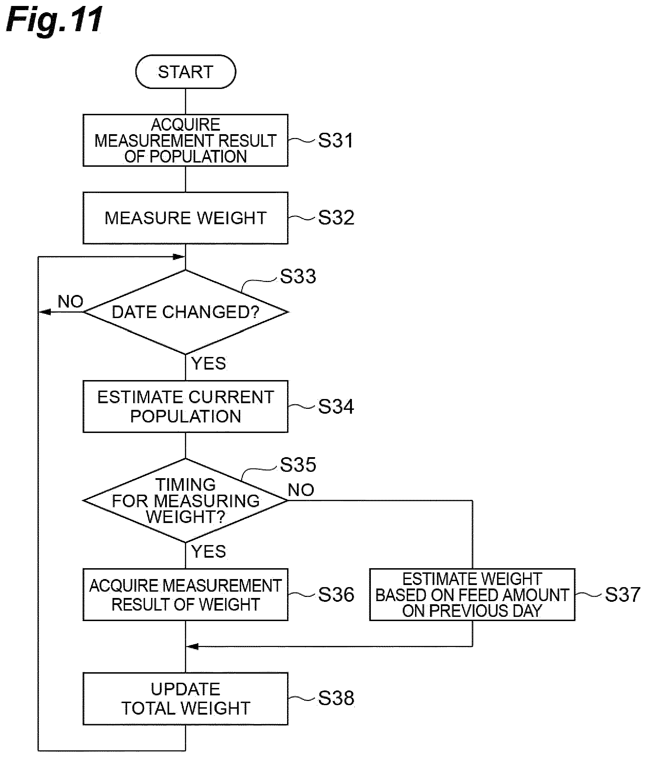

As illustrated in FIG. 11, the management device 200 executes steps S31, S32, S33, S34, and S35. In step S31, the weight evaluation unit 211 acquires information of population measured before being put into the preserve 2. Hereinafter, the population information acquired in step S31 will be referred to as "initial population". In step S32, the weight measurement unit 216 measures the weight per one aquatic organism. In step S33, the weight evaluation unit 211 waits for the date to change. In step S34, the weight evaluation unit 211 estimates the current population based on the predicted rate of decline of the aquatic organism and the initial population. In step S34, the weight evaluation unit 211 may subtract the actual number of aquatic organisms that died after being put into the preserve 2 from the initial population to estimate the current population.

In step S35, the weight evaluation unit 211 checks whether the current time is the weight measurement timing. If it is determined in step S35 that the current time is the weight measurement timing, the management device 200 executes step S36. If it is determined in step S35 that the current time is not the weight measurement timing, the management device 200 executes step S37. In step S36, the weight measurement unit 216 measures the weight per one aquatic organism. In step S37, the weight evaluation unit 211 estimates the weight per one aquatic organism based on the feed intake amount.

The weight evaluation unit 211 evaluates the feed intake amount from the latest weight measurement timing to the present based on the feed rate. For example, the weight evaluation unit 211 calculates a feed amount actual value acquired by integrating the feed rate from the latest weight measurement timing to the present time as an evaluation result of the feed intake amount. The weight evaluation unit 211 may calculate a value acquired by subtracting the remaining feed amount estimated value from the feed amount actual value as the evaluation result of the feed intake amount. The weight evaluation unit 211 estimates the weight increase rate of the aquatic organism from the measurement timing to the evaluation target timing based on the evaluation result of the feed intake amount, and estimates the current weight of the aquatic organism based on the measurement result of the weight of the aquatic organism and the estimation result of the weight increase rate of the aquatic organism.

After steps S36 and S37, the management device 200 executes step S38. In step S38, the weight evaluation unit 211 estimates the total weight of the aquatic organism at the evaluation target timing based on the estimation result of weight per one aquatic organism and the estimation result of population. The management device 200 then returns to step S34. The management device 200 executes the above procedure for each of the plurality of preserves 2.

### Feeding Planning Procedure

This procedure includes calculating a feed rate target value in accordance with time based on a feed pattern representing a relationship between the elapsed time from the feed start time to the feed end time and the feed rate. The procedure may further include changing the feed start time in accordance with the sunrise time and changing the feed end time in accordance with the sunset time. The feed rate target value in accordance with time may be calculated based on the feed pattern in which the feed start time is changed in accordance with the sunrise time and the feed end time is changed in accordance with the sunset time.

The procedure may further include calculating a daily feed amount target value based on an evaluation result of the weight of the aquatic organism. the feed rate target value in accordance with time may be calculated based on the feed amount target value and the feed pattern. For example, the feed rate target value in accordance with time may be calculated such that the total feed amount from the feed start time to the feed end time according to the feed pattern matches the feed amount target value.

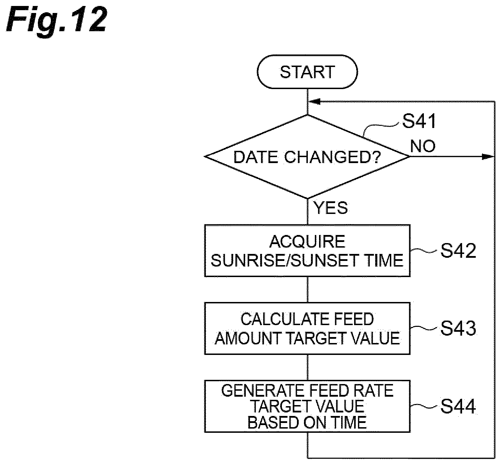

As illustrated in FIG. 12, the management device 200 executes steps S41, S42, S43, and S44. In step S41, the feed rate target value calculation unit 214 waits for the date to change. In step S42, the sunrise/sunset information acquisition unit 213 acquires information on the next sunrise/sunset time. In step S43, the feed amount target value calculation unit 212 calculates the daily feed amount target value based on the evaluation result of the weight of the aquatic organism. In step S44, the feed rate target value calculation unit 214 changes the feed start time of the feed pattern in accordance with the sunrise time, changes the feed end time of the feed pattern in accordance with the sunset time, and calculates the feed rate target value in accordance with the time based on the changed feed pattern and the feed amount target value. Hereinafter, the feed rate target value corresponding to the time of day is referred to as a "feeding plan".

The management device 200 repeatedly executes the above procedure for each of the plurality of preserves 2. When the above-described the feed pattern acquisition unit 221 changes the feed pattern, the management device 200 calculates a target feeding rate in accordance with the time based on the feed pattern after change.

### Automatic Feed Control Procedure

The procedure includes: evaluating a remaining feed amount based on the detection result of the preserve environment by the sensor 6 installed in the preserve 2; evaluating a feed intake activity of the aquatic organism in the preserve 2 based on the detection result of the preserve environment; generating a feed rate command value based on the evaluation result of the remaining feed amount and the evaluation result of the feed intake activity; and controlling the feeding machine 5 to feed at a feed rate corresponding to the feed rate command value.

The feed rate command value may be calculated such that the feed rate command value decreases as the remaining feed amount increases and the feed rate command value increases as the feed intake activity increases. The feed intake score is calculated based on the evaluation result of the remaining feed amount and the evaluation result of the feed intake activity and the feed rate command value is calculated such that the feed intake score follows the target score. The feed intake score may be calculated such that the direction in which the feed intake score changes as the remaining feed amount increases and the direction in which the feed intake score changes as the feed intake activity increases are opposite to each other. The influence degree of the feed intake activity on the feed intake score may be lowered in response to the remaining feed amount exceeding the predetermined level.

The procedure may further include correcting the feed rate command value based on a pre-planned feed rate target value.

The remaining feed amount may be evaluated based on the image of the underwater camera 8 installed in the preserve 2 and upward below the feed region of the aquatic organism, and the feed intake activity may be further evaluated based on the image of the underwater camera 8. An image variation amount caused by the movement of the aquatic organism may be calculated based on the image of the underwater camera 8, and the feed intake activity may be evaluated based on the image variation amount. The feed intake activity may be evaluated such that the feed intake activity decreases as the image variation amount increases.

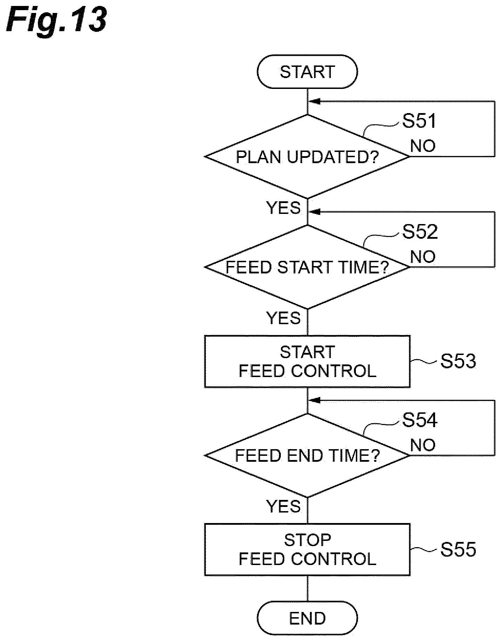

As illustrated in FIG. 13, the feed control device 100 executes steps S51, S52, S53, S54, and S55. In step S51, the speed control unit 114 waits for an update of the feeding plan. In step S52, the speed control unit 114 waits for the feed start time in the new feeding plan. In step S53, the speed control unit 114 starts controlling the feeding machine 5 based on the new feeding plan. In step S54, the speed control unit 114 waits for the feed end time in the new feeding plan. In step S55, the speed control unit 114 stops controlling the feeding machine 5 based on the new feeding plan. The feed control device 100 repeatedly executes the above procedure.

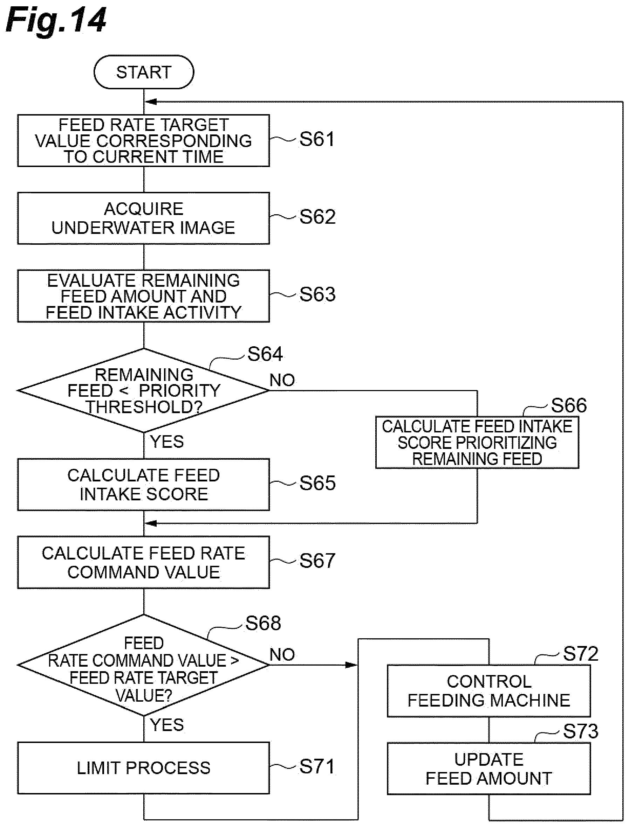

FIG. 14 is a flowchart illustrating a control procedure that starts in step S53 and stops in step S55. As illustrated in FIG. 14, the feed control device 100 executes steps S61, S62, S63, and S64. In step S61, the limiter 117 determines a feed rate target value corresponding to the current time based on the current time and the feeding plan. In step S62, the remaining feed evaluation unit 111 acquires an underwater image captured by the underwater camera 8. In step S63, the remaining feed evaluation unit 111 evaluates the remaining feed amount based on the underwater image, and the feed intake activity evaluation unit 112 evaluates the feed intake activity based on the underwater image. In step S64, the calculation method switching unit 121 checks whether the evaluation result of the remaining feed amount is lower than a priority threshold value which is an example of the predetermined level.

If it is determined in step S64 that the remaining feed amount evaluation result is lower than the priority threshold, the feed control device 100 executes step S65. If it is determined in step S64 that the remaining feed amount evaluation result exceeds the priority threshold value, the feed control device 100 executes step S66.

In step S65, the calculation method switching unit 121 sets the score calculation unit 113 to the above-described normal state. Accordingly, the score calculation unit 113 calculates the feed intake score based on the evaluation result of the remaining feed amount and the evaluation result of the feed intake activity according to the calculation method of the normal state. In step S66, the calculation method switching unit 121 sets the score calculation unit 113 to the remaining feed priority state described above. Accordingly, the score calculation unit 113 calculates the feed intake score based at least on the evaluation result of the remaining feed amount by the calculation method of the remaining feed priority state in which the influence degree of the feed intake activity with respect to the feed intake score is smaller than that in the calculation method of the normal state.

After steps S65 and S66, the feed control device 100 executes steps S67 and S68. In step S67, the speed control unit 114 calculates a feed rate command value so that the feed intake score calculated by the score calculation unit 113 follows the target score. In step S68, the limiter 117 checks whether the calculated feed rate command value exceeds the feed rate target value. If it is determined in step S68 that the feed rate command value exceeds the feed rate target value, the feed control device 100 executes step S71. In step S71, the limiter 117 changes the feed rate command value to the same value as the feed rate target value.

Next, the feed control device 100 executes steps S72 and S73. If it is determined in step S68 that the feed rate command value is less than the feed rate target value, the feed control device 100 executes steps S72 and S73 without executing step S71. In step S72, the speed control unit 114 controls the feeding machine 5 so as to feed at a feed rate corresponding to the feed rate command value. In step S73, the feed amount calculation unit 233 updates the calculation result of the feed amount actual value by integrating the feed rate command value. The feed control device 100 then returns to the step S61. The feed control device 100 repeats the above processing at a predetermined control cycle.

### Manual Feed Control Procedure

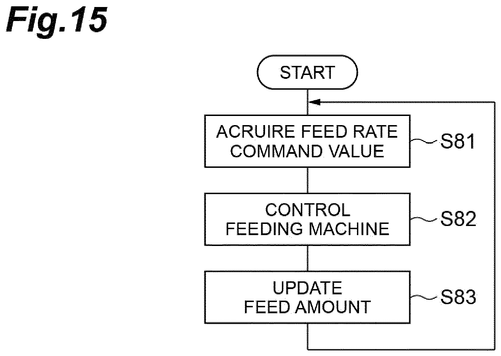

This procedure is a procedure executed by the feed control device 100 instead of steps S61 to S73 described above when the automatic/manual switching unit 116 described above is in the manual mode. As illustrated in FIG. 15, the feed control device 100 executes steps S81, S82, and S83. In step S81, the manual input acquisition unit 115 acquires a feed rate command value determined by manual operation. In step S82, the speed control unit 114 controls the feeding machine 5 so as to feed at a feed rate corresponding to the feed rate command value. In step S83, the feed amount calculation unit 233 updates the calculation result of the feed amount actual value by integrating the feed rate command value. The feed control device 100 repeats the above processing at a predetermined control cycle.

### Feed Intake Score Display Procedure

This procedure is executed by the management device 200 when the display function of the feed intake score is called by the user interface 295. The procedure further includes displaying the feed intake score to the user interface 295. The target score may be displayed to the user interface 295 together with the feed intake score.

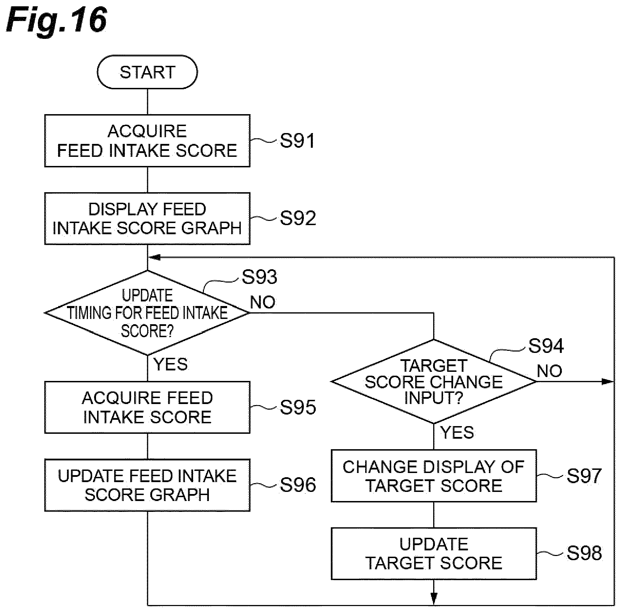

As illustrated in FIG. 16, the management device 200 executes steps S91, S92, and S93. In step S91, the feed intake score display unit 231 acquires the calculation results of feed intake scores for the plurality of preserves 2 from the plurality of feed control devices 100, respectively. In step S92, the feed intake score display unit 231 displays a feed intake score for each of the plurality of preserves 2. For example, the feed intake score display unit 231 displays the feed intake score graph 400 described above. At this time, the feed intake score display unit 231 displays the target line 412 in the feed intake score graph 400. In step S93, the feed intake score display unit 231 checks whether the current time is the update timing of the feed intake score in each the feed control device 100 (for example, the timing at which the above steps S65 and S66 are executed).

If it is determined in step S93 that the current time is not the update timing of the feed intake score, the management device 200 executes step S94. In step S94, the feed intake score display unit 231 checks whether there is an operation of changing the position of the target line 412. If it is determined in step S94 that there is no operation of changing the position of the target line 412, the management device 200 returns the processing to step S93. Thereafter, the management device 200 waits for the current time to be update timing of the feed intake score or the operation of changing the position of the target line 412 to be executed.

If it is determined in step S93 that the current time is the update timing of the feed intake score, the management device 200 executes steps S95 and S96. In step S95, the feed intake score display unit 231 acquires calculation results of feed intake scores for the plurality of preserves 2 from the plurality of feed control devices 100, respectively, as in step S91. In step S96, the feed intake score display unit 231 updates the display of the feed intake score for each preserve 2 in the feed intake score graph 400.

In step S94, if it is determined that there is an operation of changing the position of the target line 412, the management device 200 executes steps S97 and S98. In step S97, the feed intake score display unit 231 changes the display position of the target line 412 according to the operation of changing the position of the target line 412. In step S98, the target score setting unit 215 changes the target score based on the changed position of the target line 412. Thereafter, control of the feeding machine 5 in each the feed control device 100 is executed based on the changed target score. The management device 200 repeats steps S93 to S98 until the feed intake score graph 400 is closed.

### Feed Status Display Procedure

This procedure is executed by the management device 200 when the display function of the feed status is called by the user interface 295. The procedure includes displaying the current feed rate on the user interface 295 for each of the plurality of preserves 2. An achievement rate for the feed amount target value may be further displayed on the user interface.

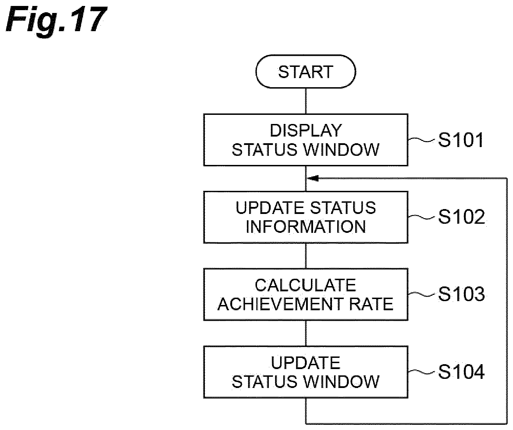

As illustrated in FIG. 17, the management device 200 executes steps S101, S102, S103, and S104. In step S101, the feed status display unit 232 displays a screen displaying the feed rate in the user interface 295 for each of the plurality of preserves 2. For example, the feed status display unit 232 displays the above-described the status window 500 on the user interface 295.

In step S102, the feed amount calculation unit 233 acquires a feed rate command value for each of the plurality of preserves 2 from each of a plurality of the feed control device 100, and calculates a feed amount actual value for each of the plurality of preserves 2. In step S103, the feed status display unit 232 calculates an achievement rate of the feed amount actual value with respect to the feed amount target value for each of the plurality of preserves 2. In step S104, the feed status display unit 232 updates the status window 500 based on the feed rate command value acquired for each of the plurality of preserves 2 in step S102, the feed amount actual value calculated for each of the plurality of preserves 2 in step S102, and the achievement rate for each of the plurality of preserves 2 calculated in step S103. The management device 200 then returns to the step S102. The management device 200 repeats steps S102 to S104 until the status window 500 is closed.

### Distribution Chart Display Procedure

This procedure is executed by the management device 200 when the display function of the distribution chart is called by the user interface 295. The procedure includes displaying a feed proportion and an increase rate of the total weight of the aquatic organism on the user interface 295 for each of the plurality of preserves 2. A distribution chart in which the feed proportion and the increase rate are mapped to a coordinate having a first coordinate axis representing the magnitude of the feed proportion and a second coordinate axis representing the magnitude of the increase rate for each of the plurality of preserves 2 may be displayed. For each feed conversion ratio representing a ratio of the feed proportion to the increase rate, a plurality of contour lines indicating a relationship between the feed proportion and the increase rate may be further displayed on the distribution chart.

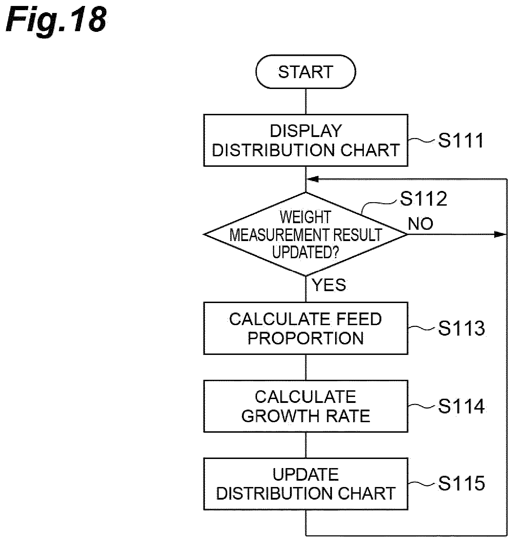

As illustrated in FIG. 18, the management device 200 executes steps S111, S112, S113, S114, and S115. In step S111, the distribution chart display unit 236 displays a window indicating the feed proportion and the increase rate of the total weight of the aquatic organism on the user interface 295 for each of the plurality of preserves 2. For example, the distribution chart display unit 236 displays the above-described the distribution chart 600 on the user interface 295. At this time, the distribution chart display unit 236 displays the plurality of the contour line 611 on the distribution chart 600.

In step S112, the distribution chart display unit 236 waits for the measurement result of the weight by the weight measurement unit 216 to be updated. In step S113, the feed proportion calculation unit 234 calculates the actual value of the feed proportion for each of the plurality of preserves 2. In step S114, the growth rate calculation unit 235 calculates an increase rate of the total weight of the aquatic organism for each of the plurality of preserves 2. In step S115, the distribution chart display unit 236 maps the plurality of data points 612 representing the feed proportion and increase rate for each of the plurality of preserves 2 in the coordinate of the distribution chart 600 based on the calculation results of steps S113 and S114. The management device 200 then returns to the step S112. The management device 200 repeats steps S112 to S115 until the distribution chart 600 is closed.

### Effects of Present Embodiment

As described above, the feeding method executed by the feeding system 3 includes: evaluating the remaining feed amount based on the detection result of the environment in the preserve 2 by a sensor 6 installed in the preserve 2; evaluating the feed intake activity of aquatic organisms in the preserve 2 based on the detection result of the environment in the preserve 2; and generating a feed rate command value based on the evaluation result of the remaining feed amount and the evaluation result of the feed intake activity, and controlling the feeding machine 5 to feed at a feed rate corresponding to the feed rate command value.

According to the feeding method, the feed rate command value is calculated based on the evaluation result of the remaining feed amount, so that the feeding machine 5 can be controlled to suppress the remaining feed. In addition, by calculating the feed rate command value further based on the evaluation result of the feed intake activity, it is possible to control the feeding machine 5 so as to suppress the shortage of the feed in the situation where there is no remaining feed. Therefore, it is possible to suppress an excess or deficiency of the feed amount. Therefore, it is effective for more efficient feeding.

The feed rate command value may be calculated such that the feed rate command value decreases as the remaining feed amount increases and the feed rate command value increases as the feed intake activity increases. In this case, it is possible to more reliably suppress the excess or deficiency of the feed amount.

The feed intake score is calculated based on the evaluation result of the remaining feed amount and the evaluation result of the feed intake activity, and the feed rate command value is calculated such that the feed intake score follows the target score. In this case, an appropriate feed rate command value may be readily calculated by integrating the evaluation result of the remaining feed amount and the evaluation result of the feed intake activity into one feed intake score.

The feed intake score may be calculated such that the direction in which the feed intake score varies as the remaining feed amount increases and the direction in which the feed intake score varies as the feed intake activity increases are opposite to each other. In this case, it is possible to calculate the feed intake score that more accurately represents the excess or deficiency situation of the feed amount.

The influence degree of the feed intake activity on the feed intake score may be lowered in response to the evaluation result of the remaining feed amount exceeding a predetermined level. In this case, by increasing the influence degree of the remaining feed amount with respect to the feed intake score in response to the remaining feed amount exceeding the predetermined level, excessive feeding can be more reliably suppressed.

The feeding method may further include displaying the feed intake score on the user interface 295. In this case, it is possible to improve the ease with which the operator recognizes the excess or deficiency of the feed.

The target score may be displayed to the user interface 295 together with the feed intake score. In this case, it is possible to further improve the ease with which the operator recognizes the excess or deficiency of the feed.

The feeding method further includes correcting the feed rate command value based on a pre-planned feed rate target value. In this case, while the feed rate is adjusted in accordance with the feed intake state, it is possible to suppress the deviation of the feeding result from the feeding plan.

The feeding method further includes calculating a feed rate target value in accordance with time based on a feed pattern representing a relationship between an elapsed time from the feed start time to the feed end time and the feed rate. In this case, by changing the feed rate target value in accordance with the time, the feed amount can be finely adjusted in accordance with the biology of the aquatic organism.

The feed start time of the feed pattern may be changed in accordance with the sunrise time, the feed end time of the feed pattern may be changed in accordance with the sunset time, and the feed rate target value in accordance with the time may be calculated based on the changed feed pattern. By changing the feed pattern in accordance with the sunrise time and the sunset time, a more efficient feed rate target value may be calculated.

The feeding method further includes evaluating a weight of the aquatic organism, and calculating a feed amount target value in a day based on an evaluation result of the weight of the aquatic organism. The feed rate target value in accordance with the time is calculated based on the feed amount target value and the feed pattern. In this case, it is possible to calculate a more efficient feed rate target value further based on the evaluation result of the weight of the aquatic organism.

The feed rate target value in accordance with the time may be calculated such that the total feed amount from the feed start time to the feed end time according to the feed pattern matches the feed amount target value. The evaluation result of the weight of the aquatic organism can be readily and appropriately reflected in the feed rate target value.

Evaluating the weight of the aquatic organism may include: acquiring a measurement result of the weight of the aquatic organism; evaluating the feed intake amount from the measurement timing of the weight of the aquatic organism to the evaluation target timing based on the feed rate; estimating the weight increase rate of the aquatic organism from the measurement timing to the evaluation target timing based on the evaluation result of the feed intake amount; and estimating the weight of the aquatic organism at the evaluation target timing based on the measurement result of the weight of the aquatic organism and the estimation result of the weight increase rate of the aquatic organism. In this case, by combining the measurement of the total weight with the estimation of the total weight based on the evaluation result of the feed intake amount, it is possible to suppress the delay of the increase in the feed amount in accordance with the increase in the weight of the aquatic organism.

The feeding method may further include estimating the population of aquatic organisms at the evaluation target timing further based on a predicted rate of decrease of the population of aquatic organisms. The measurement result of the weight per one aquatic organism may be acquired, the weight per one aquatic organism at the evaluation target timing may be estimated based on the measurement result of the weight per one aquatic organism and the estimation result of the weight increase rate of the aquatic organism, and the total weight of the aquatic organism at the evaluation target timing may be estimated based on the estimation result of the weight per aquatic organism and the estimation result of the population. In this case, the total weight of the aquatic organism can be estimated with higher reliability by being further based on the predicted reduction rate of the population of the aquatic organism.

The feeding method may further include displaying a feed pattern on the user interface 295. In this case, the operator can readily recognize the feed pattern that has been set.

The sunrise time and the sunset time may be displayed on the user interface 295 together with the feed pattern. In this case, the operator can readily recognize the relationship between the sunrise time, the sunset time, and the feed pattern that has been set.

The feeding method may further include changing the feed pattern based on an editing input for the feed pattern displayed on the user interface 295 and the feed rate target value in accordance with the time may be calculated based on the feed pattern after change. In this case, the feed pattern can be changed by editing input to the feed pattern displayed on the user interface 295, so that the usability for the operator can be further improved.

The feeding method may further include: storing the feed pattern displayed on the user interface 295 based on the save command input, and loading the stored feed pattern based on the load command input and displaying the feed pattern on the user interface 295. In this case, by making the feed pattern that has already been set reusable, it is possible to further improve the usability for the operator.

The feeding method may further include: allocating the stored feed pattern to the shortcut object on the user interface 295 based on the allocation command input; and loading the saved feed pattern and displaying the feed pattern on the user interface 295 in response to an operation of the shortcut object. In this case, by making it easier to call the stored feed pattern, the usability for the operator can be further improved.

The feeding method may further include displaying a current feed rate on the user interface 295 for each of a plurality of preserves 2 including the preserve 2. In this case, it is possible to cause the operator to readily recognize the feed situation in the plurality of preserves 2.

The feeding method may further include displaying a current feed rate and an achievement rate for a feed amount target value on the user interface 295 for each of the plurality of preserves 2 including the preserve 2. In this case, it is possible to cause the operator to more readily recognize the feed situation in the plurality of preserves 2.

The feeding method may further include displaying, on the user interface 295, a feed proportion representing a feed amount as a ratio to a total weight of the aquatic organism and an increase rate of the total weight of the aquatic organism for each of the plurality of preserves 2 including the preserve 2. In this case, the operator can readily recognize the appropriateness of the feeding state.

The feeding method may include displaying the feed proportion and the increase rate on the user interface 295 may include displaying a distribution chart in which the feed proportion and the increase rate are mapped to a coordinate having a first coordinate axis representing a magnitude of the feed proportion and a second coordinate axis representing a magnitude of the increase rate for each of the plurality of preserves 2. In this case, the operator can more readily recognize the appropriateness of the feeding state.

The display chart may further display a plurality of contour lines indicating a relationship between the feed proportion and the increase rate for each feed conversion ratio representing a ratio of the feed proportion to the increase rate. In this case, the operator can more readily recognize the appropriateness of the feeding state.

The remaining feed amount may be evaluated based on the image of the underwater camera 8 installed upward below the feed region of the aquatic organism in the preserve 2. In this case, the remaining feed amount can be evaluated with high reliability.

The feed intake activity may be further evaluated based on the image of the underwater camera 8. In this case, the feed intake activity can also be evaluated with high reliability.

An image variation amount caused by the movement of the aquatic organism may be calculated based on the image of the underwater camera 8, and the feed intake activity may be evaluated based on the image variation amount. In this case, it is possible to readily evaluate the feed intake activity based on the image of the underwater camera 8.

The feed intake activity may be evaluated such that the feed intake activity decreases as the image variation amount increases. In this case, the feed intake activity can be evaluated with higher reliability.

Although the embodiments have been described above, the present disclosure is not necessarily limited to the above-described embodiments, and various modifications can be made without departing from the scope of the present disclosure.

### Reference Signs List

1: aquaculture system, 2: preserve, 3: feeding system, 5: feeding machine, 6: sensor, 8: underwater camera, 100: feed control device, 111: remaining feed evaluation unit, 112: feed intake activity evaluation unit, 114: speed control unit, 295: user interface

## Claims

1. A computer-implemented feeding method comprising:
evaluating a remaining feed amount based on a detection result of feed that was not ingested by fish in a preserve (2) by one or more sensors (6) installed in the preserve (2) during feeding into the preserve (2) with a feeding machine (5);
evaluating a feed intake activity of the fish in the preserve (2) based on a detection result of the fish by the one or more sensors (6) during feeding into the preserve (2) with the feeding machine (5); and
**characterized by**:
calculating a feed intake score based on an evaluation result of the remaining feed amount and an evaluation result of the feed intake activity;
generating a feed rate command value so that the feed intake score follows a target score;
evaluating a weight of the fish;
calculating a feed amount target value in a day based on the evaluation result of the weight of the fish;
calculating a feed rate target value in accordance with the time based on the feed amount target value and a feed pattern, the feed pattern representing a relationship between an elapsed time and a feed rate from a feed start time to a feed end time;
correcting the feed rate command value based on a pre-planned feed rate target value; and
controlling the feeding machine (5) to feed at a feed rate corresponding to the feed rate command value.

2. The feeding method according to claim 1, wherein the feed rate command value is calculated such that the feed rate command value decreases as the remaining feed amount increases and the feed rate command value increases as the feed intake activity increases.

3. The feeding method according to claim 1 or 2, wherein the feed intake score is calculated such that a direction in which the feed intake score varies as the remaining feed amount increases and a direction in which the feed intake score varies as the feed intake activity increases are opposite to each other.

4. The feeding method according to claim 3, wherein an influence degree of the feed intake activity with respect to the feed intake score is lowered in response to the evaluation result of the remaining feed amount exceeding a predetermined level.

5. The feeding method according to any one of claims 1 to 4, further comprising displaying the feed intake score on a user interface (295).

6. The feeding method according to claim 5, wherein the target score is displayed on the user interface (295) together with the feed intake score.

7. The feeding method according to any one of claims 1 to 6, wherein the feed start time of the feed pattern is changed in accordance with a sunrise time, the feed end time of the feed pattern is changed in accordance with a sunset time, and the feed rate target value in accordance with the time is calculated based on the changed feed pattern.

8. The feeding method according to any one of claims 1 to 7, wherein the feed rate target value in accordance with time is calculated such that a total feed amount from the feed start time to the feed end time according to the feed pattern matches the feed amount target value.

9. The feeding method according to any one of claims 1 to 8, wherein evaluating the weight of the fish comprises:
acquiring a measurement result of the weight of the fish;
evaluating a feed intake amount from a measurement timing of the weight of the fish to an evaluation target timing based on the feed rate;
estimating a weight increase rate of the fish from the measurement timing to the evaluation target timing based on the evaluation result of the feed intake amount; and
estimating the weight of the fish at the evaluation target timing based on the measurement result of the weight of the fish and an estimation result of the weight increase rate of the fish.

10. The feeding method according to claim 9, further comprising estimating a population of the fish at the evaluation target timing based on a population of the fish placed in the preserve (2),
wherein a measurement result of a weight per one fish is acquired,
wherein the weight per one fish at the evaluation target timing is estimated based on the measurement result of the weight per one fish and an estimation result of a weight increase rate of the fish, and
wherein a total weight of the fish at the evaluation target timing is estimated based on the estimation result of the weight per one fish and an estimation result of the population.

11. The feeding method according to any one of claims 1 to 10, further comprising displaying the feed pattern on a user interface (295).

12. The feeding method according to claim 11, wherein a sunrise time and a sunset time are displayed on the user interface (295) together with the feed pattern.

13. The feeding method according to claim 11 or 12, further comprising changing the feed pattern based on an editing input for the feed pattern displayed on the user interface (295),
wherein the feed rate target value in accordance with the time is calculated based on the feed pattern after change.

14. The feeding method according to any one of claims 11 to 13, further comprising:
saving the feed pattern displayed on the user interface (295) based on a save command input; and
loading the saved feed pattern based on a load command input and displaying the feed pattern on the user interface (295).

15. The feeding method according to claim 14, further comprising:
allocating the saved feed pattern to a shortcut object on the user interface (295) based on an allocation command input; and
loading the saved feed pattern and displaying the feed pattern on the user interface (295) in response to an operation of the shortcut object.

16. The feeding method according to any one of claims 1 to 15, further comprising displaying a current feed rate on a user interface (295) for each of a plurality of preserves including the preserve (2).

17. The feeding method according to any one of claims 1 to 10, further comprising displaying a current feed rate and an achievement rate for the feed amount target value on a user interface (295) for each of a plurality of preserves including the preserve (2).

18. The feeding method according to any one of claims 1 to 17, further comprising displaying, on a user interface (295), a feed proportion representing a feed amount as a ratio to a total weight of the fish and an increase rate of the total weight of the fish for each of a plurality of preserves including the preserve (2).

19. The feeding method according to claim 18, wherein displaying the feed proportion and the increase rate on the user interface (295) comprises displaying a distribution chart in which the feed proportion and the increase rate are mapped to a coordinate having a first coordinate axis representing a magnitude of the feed proportion and a second coordinate axis representing a magnitude of the increase rate for each of the plurality of preserves.

20. The feeding method according to claim 19, wherein the distribution chart further displays a plurality of contour lines representing a relationship between the feed proportion and the increase rate for each feed conversion ratio representing a ratio of the feed proportion to the increase rate.

21. The feeding method according to any one of claims 1 to 20, wherein the remaining feed amount is evaluated based on an image of a camera installed upward below a feed region of the fish in the preserve (2).

22. The feeding method according to claim 21, wherein the feed intake activity is further evaluated based on the image of the camera.

23. The feeding method according to claim 22, wherein an image variation amount caused by a movement of the fish is calculated based on the image of the camera, and the feed intake activity is evaluated based on the image variation amount.

24. The feeding method according to claim 23, wherein the feed intake activity is evaluated such that the feed intake activity decreases as the image variation amount increases.

25. A feeding system (3) comprising:
a feeding machine (5) configured to feed into a preserve (2) containing fish;
one or more sensors (6) configured to detect feed that has not been ingested by the fish in the preserve (2) and the fish in the preserve (2); and
a feed control device (100) configured to control a feed rate of the feeding machine (5),
wherein the feed control device (100) comprises:
a remaining feed evaluation unit (111) configured to evaluate a remaining feed amount based on a detection result of the feed that is not ingested by the fish in the preserve (2) by the one or more sensors (6) during feeding into the preserve (2) by the feeding machine (5);
a feed intake activity evaluation unit (112) configured to evaluate a feed intake activity of the fish based on the detection result of the fish by the one or more sensors (6) during feeding into the preserve (2) by the feeding machine (5); and
**characterized by** a speed control unit (114) configured to:
calculate a feed intake score based on an evaluation result of the remaining feed amount and an evaluation result of the feed intake activity;
generate a feed rate command value to make the feed intake score follow a target score;
evaluate a weight of the fish;
calculate a feed amount target value in a day based on the evaluation result of the weight of the fish;
calculate a feed rate target value in accordance with the time based on the feed amount target value and a feed pattern, the feed pattern representing a relationship between an elapsed time and a feed rate from a feed start time to a feed end time;
correct the feed rate command value based on a pre-planned feed rate target value; and
control the feeding machine (5) to feed at a feed rate corresponding to the feed rate command value.

26. A computer program comprising instructions which, when the program is executed by a computing device, causes the device to execute:
evaluating a remaining feed amount based on a detection result of feed that was not ingested by fish in a preserve (2) by one or more sensors (6) installed in the preserve (2) during feeding into the preserve (2) by a feeding machine (5);
evaluating a feed intake activity of the fish in the preserve (2) based on the detection result of the fish by the one or more sensors (6) during feeding into the preserve (2) by the feeding machine (5); and
**characterized by**:
calculating a feed intake score based on an evaluation result of the remaining feed amount and an evaluation result of the feed intake activity;
generating a feed rate command value to make the feed intake score follow a target score;
evaluating a weight of the fish;
calculating a feed amount target value in a day based on the evaluation result of the weight of the fish;
calculating a feed rate target value in accordance with the time based on the feed amount target value and a feed pattern, the feed pattern representing a relationship between an elapsed time and a feed rate from a feed start time to a feed end time;
correcting the feed rate command value based on a pre-planned feed rate target value; and
controlling the feeding machine (5) to feed at a feed rate corresponding to the feed rate command value.

## Patentansprüche

1. Computerimplementiertes Fütterungsverfahren, das aufweist:
Bewerten einer Restfuttermenge basierend auf einem Erfassungsergebnis von Futter, das von den Fischen in einem Becken (2) nicht aufgenommen wurde, durch einen oder
mehrere Sensoren (6), die im Becken (2) installiert sind, während der Fütterung in das Becken (2) mit einer Fütterungsmaschine (5);
Bewerten einer Futteraufnahmeaktivität der Fische im Becken (2) basierend auf einem Erfassungsergebnis der Fische durch den einen oder die mehreren Sensoren (6) während der Fütterung in den Becken (2) mit der Fütterungsmaschine (5); und
**gekennzeichnet durch**:
Berechnen eines Futteraufnahmewerts basierend auf einem Bewertungsergebnis der Restfuttermenge und einem Bewertungsergebnis der Futteraufnahmeaktivität;
Erzeugen eines Fütterungsraten-Befehlswerts, so dass der Futteraufnahmewert einem Sollwert folgt;
Bewerten eines Gewichts der Fische;
Berechnen eines Futtermengen-Sollwerts an einem Tag basierend auf dem Bewertungsergebnis des Gewichts der Fische;
Berechnen eines Fütterungsraten-Sollwerts entsprechend der Zeit basierend auf dem Futtermengen-Sollwert und einem Fütterungsmuster, wobei das Fütterungsmuster eine Beziehung zwischen einer verstrichenen Zeit und einer Fütterungsrate von einer Fütterungsstartzeit bis zu einer Fütterungsendzeit repräsentiert;
Korrigieren des Fütterungsraten-Befehlswerts basierend auf einem vorab geplanten Fütterungsraten-Sollwert; und
Steuern der Fütterungsmaschine (5), um mit einer Fütterungsrate zu füttern, die dem Fütterungsraten-Befehlswert entspricht.

2. Fütterungsverfahren nach Anspruch 1, wobei der Fütterungsraten-Befehlswert so berechnet wird, dass der Fütterungsraten-Befehlswert abnimmt, wenn die Restfuttermenge zunimmt, und der Fütterungsraten-Befehlswert zunimmt, wenn die Futteraufnahmeaktivität zunimmt.

3. Fütterungsverfahren nach Anspruch 1 oder 2, wobei der Futteraufnahmewert so berechnet wird, dass eine Richtung, in der der Futteraufnahmewert variiert, wenn die Restfuttermenge zunimmt, und eine Richtung, in der der Futteraufnahmewert variiert, wenn die Futteraufnahmeaktivität zunimmt, einander entgegengesetzt sind.

4. Fütterungsverfahren nach Anspruch 3, wobei der Einflussgrad der Futteraufnahmeaktivität in Bezug auf den Futteraufnahmewert als Reaktion darauf gesenkt wird, dass das Bewertungsergebnis der Restfuttermenge eine vorbestimmte Höhe überschreitet.

5. Fütterungsverfahren nach einem der Ansprüche 1 bis 4, das ferner das Anzeigen des Futteraufnahmewerts auf einer Benutzeroberfläche (295) aufweist.

6. Fütterungsverfahren nach Anspruch 5, wobei der Sollwert zusammen mit dem Futteraufnahmewert auf der Benutzeroberfläche (295) angezeigt wird.

7. Fütterungsverfahren nach einem der Ansprüche 1 bis 6, wobei die Fütterungsstartzeit des Fütterungsmusters entsprechend einer Sonnenaufgangszeit geändert wird, die Fütterungsendzeit des Fütterungsmusters entsprechend einer Sonnenuntergangszeit geändert wird und der Fütterungsraten-Sollwert entsprechend der Zeit basierend auf dem geänderten Fütterungsmuster berechnet wird.

8. Fütterungsverfahren nach einem der Ansprüche 1 bis 7, wobei der Fütterungsraten-Sollwert entsprechend der Zeit so berechnet wird, dass die Gesamtfuttermenge von der Fütterungsstartzeit bis zur Fütterungsendzeit gemäß dem Fütterungsmuster mit dem Futtermengen-Sollwert übereinstimmt.

9. Fütterungsverfahren nach einem der Ansprüche 1 bis 8, wobei das Bewerten des Gewichts der Fische aufweist:
Erfassen eines Messergebnisses des Gewichts der Fische;
Bewerten einer Futteraufnahmemenge vom Messzeitpunkt des Gewichts der Fische bis zu einem Bewertungssollzeitpunkt basierend auf der Fütterungsrate;
Schätzen einer Gewichtszunahmerate der Fische vom Messzeitpunkt bis zum Bewertungssollzeitpunkt basierend auf dem Bewertungsergebnis der Futteraufnahmemenge; und
Schätzen des Gewichts der Fische zum Bewertungssollzeitpunkt basierend auf dem Messergebnis des Gewichts der Fische und einem Schätzergebnis der Gewichtszunahmerate der Fische.

10. Fütterungsverfahren nach Anspruch 9, das ferner das Schätzen einer Population der Fische zum Bewertungssollzeitpunkt basierend auf einer Population der in das Becken (2) eingesetzten Fische aufweist,
wobei ein Messergebnis eines Gewichts für einen Fisch erfasst wird,
wobei das Gewicht für einen Fisch zum Bewertungssollzeitpunkt basierend auf dem Messergebnis des Gewichts für einen Fisch und einem Schätzergebnis der Gewichtszunahmerate der Fische geschätzt wird, und
wobei ein Gesamtgewicht der Fische zum Bewertungssollzeitpunkt basierend auf dem Schätzergebnis des Gewichts für einen Fisch und einem Schätzergebnis der Population geschätzt wird.

11. Fütterungsverfahren nach einem der Ansprüche 1 bis 10, das ferner das Anzeigen des Fütterungsmusters auf einer Benutzeroberfläche (295) aufweist.

12. Fütterungsverfahren nach Anspruch 11, wobei eine Sonnenaufgangszeit und eine Sonnenuntergangszeit zusammen mit dem Fütterungsmuster auf der Benutzeroberfläche (295) angezeigt werden.

13. Fütterungsverfahren nach Anspruch 11 oder 12, das ferner das Ändern des Fütterungsmusters basierend auf einer Bearbeitungseingabe für das auf der Benutzeroberfläche (295) angezeigte Fütterungsmuster aufweist,
wobei der Fütterungsraten-Sollwert entsprechend der Zeit basierend auf dem geänderten Fütterungsmuster berechnet wird.

14. Fütterungsverfahren nach einem der Ansprüche 11 bis 13, das ferner aufweist:
Speichern des auf der Benutzeroberfläche (295) angezeigten Fütterungsmusters basierend auf einer Speicherbefehlseingabe; und
Laden des gespeicherten Fütterungsmusters basierend auf einer Ladebefehlseingabe und Anzeigen des Fütterungsmusters auf der Benutzeroberfläche (295).

15. Fütterungsverfahren nach Anspruch 14, das ferner aufweist:
Zuweisen des gespeicherten Fütterungsmusters zu einem Schnelltastenobjekt auf der Benutzeroberfläche (295) basierend auf einer eingegebenen Zuweisungsbefehlseingabe; und
Laden des gespeicherten Fütterungsmusters und Anzeigen des Fütterungsmusters auf der Benutzeroberfläche (295) als Reaktion auf eine Betätigung des Schnelltastenobjekts.

16. Fütterungsverfahren nach einem der Ansprüche 1 bis 15, das ferner das Anzeigen einer aktuellen Fütterungsrate auf einer Benutzeroberfläche (295) für jedes von mehreren Becken, einschließlich des Becken (2) aufweist.

17. Fütterungsverfahren nach einem der Ansprüche 1 bis 10, das ferner das Anzeigen einer aktuellen Fütterungsrate und einer Erreichungsrate für den Futtermengen-Sollwert auf einer Benutzeroberfläche (295) für jedes von mehreren Becken, einschließlich des Beckens (2) aufweist.

18. Fütterungsverfahren nach einem der Ansprüche 1 bis 17, das ferner das Anzeigen auf einer Benutzeroberfläche (295) eines Futteranteils, der eine Futtermenge als Verhältnis zum Gesamtgewicht der Fische repräsentiert, und einer Zunahmerate des Gesamtgewichts der Fische für jedes von mehreren Becken, einschließlich des Beckens (2) aufweist.

19. Fütterungsverfahren nach Anspruch 18, wobei das Anzeigen des Futteranteils und der Zunahmerate auf der Benutzeroberfläche (295) das Anzeigen eines Verteilungsdiagramms aufweist, in dem der Futteranteil und die Zunahmerate auf eine Koordinate abgebildet werden, die eine erste Koordinatenachse, welche eine Größe des Futteranteils repräsentiert, und eine zweite Koordinatenachse aufweist, welche eine Größe der Zunahmerate für jedes der mehreren Becken repräsentiert.

20. Fütterungsverfahren nach Anspruch 19, wobei das Verteilungsdiagramm ferner mehrere Konturlinien anzeigt, die eine Beziehung zwischen dem Futteranteil und der Zunahmerate für jedes Futterverwertungsverhältnis darstellen, das ein Verhältnis des Futteranteils zur Zunahmerate repräsentiert.

21. Fütterungsverfahren nach einem der Ansprüche 1 bis 20, wobei die Restfuttermenge basierend auf einem Bild einer Kamera bewertet wird, die nach oben gerichtet unter einem Fütterungsbereichs der Fische im Becken (2) installiert ist.

22. Fütterungsverfahren nach Anspruch 21, wobei die Futteraufnahmeaktivität ferner basierend auf dem Bild der Kamera bewertet wird.

23. Fütterungsverfahren nach Anspruch 22, wobei ein durch eine Bewegung der Fische verursachter Bildvariationsbetrag basierend auf dem Bild der Kamera berechnet wird und die Futteraufnahmeaktivität basierend auf dem Bildvariationsbetrag bewertet wird.

24. Fütterungsverfahren nach Anspruch 23, wobei die Futteraufnahmeaktivität so bewertet wird, dass die Futteraufnahmeaktivität abnimmt, wenn der Bildvariationsbetrag zunimmt.

25. Fütterungssystem (3), das aufweist:
eine Fütterungsmaschine (5), die konfiguriert ist, um in ein Becken (2) zu füttern, das Fische enthält;
einen oder mehrere Sensoren (6), die konfiguriert sind, um Futter, das von den Fischen im Becken (2) nicht aufgenommen wurde, und die Fische im Becken (2) zu erfassen; und
eine Futtersteuervorrichtung (100), die konfiguriert ist, um eine Futterzufuhrrate der Fütterungsmaschine (5) zu steuern,
wobei die Futtersteuervorrichtung (100) aufweist:
eine Restfutter-Bewertungseinheit (111), die konfiguriert ist, um eine Restfuttermenge basierend auf einem Erfassungsergebnis des Futters, das von den Fischen im Becken (2) nicht aufgenommen wurde, durch den einen oder die mehreren Sensoren (6) während der Fütterung in das Becken (2) durch die Fütterungsmaschine (5) zu bewerten;
eine Futteraufnahmeaktivitäts-Bewertungseinheit (112), die konfiguriert ist, um eine Futteraufnahmeaktivität der Fische basierend auf dem Erfassungsergebnis der Fische durch den einen oder die mehreren Sensoren (6) während der Fütterung in das Becken (2) durch die Fütterungsmaschine (5) zu bewerten; und
**gekennzeichnet durch** eine Geschwindigkeitssteuereinheit (114), die konfiguriert ist, um:
einen Futteraufnahmewert basierend auf einem Bewertungsergebnis der Restfuttermenge und einem Bewertungsergebnis der Futteraufnahmeaktivität zu berechnen;
einen Fütterungsraten-Befehlswert zu erzeugen, um den Futteraufnahmewert einem Sollwert folgen zu lassen;
ein Gewicht der Fische zu bewerten;
einen Futtermengen-Sollwert an einem Tag basierend auf dem Bewertungsergebnis des Gewichts der Fische zu berechnen;
einen Fütterungsraten-Sollwert entsprechend der Zeit basierend auf dem Futtermengen-Sollwert und einem Fütterungsmuster zu berechnen, wobei das Fütterungsmuster eine Beziehung zwischen einer verstrichenen Zeit und einer Fütterungsrate von einer Fütterungsstartzeit bis zu einer Fütterungsendzeit repräsentiert;
den Fütterungsraten-Befehlswert basierend auf einem vorab geplanten Fütterungsraten-Sollwert zu korrigieren; und
die Fütterungsmaschine (5) so zu steuern, dass sie mit einer Fütterungsrate füttert, die dem Fütterungsraten-Befehlswert entspricht.

26. Computerprogramm, das Anweisungen aufweist, die, wenn das Programm von einer Rechenvorrichtung ausgeführt wird, die Vorrichtung veranlassen, auszuführen:
Bewerten einer Restfuttermenge basierend auf einem Erfassungsergebnis von Futter, das von Fischen in einem Becken (2) nicht aufgenommen wurde, durch einen oder mehrere Sensoren (6), die im Becken (2) installiert sind, während der Fütterung in das Becken (2) durch eine Fütterungsmaschine (5);
Bewerten einer Futteraufnahmeaktivität der Fische im Becken (2) basierend auf dem Erfassungsergebnis der Fische durch den einen oder die mehreren Sensoren (6) während der Fütterung in das Becken (2) durch die Fütterungsmaschine (5); und
**gekennzeichnet durch**:
Berechnen eines Futteraufnahmewerts basierend auf einem Bewertungsergebnis der Restfuttermenge und einem Bewertungsergebnis der Futteraufnahmeaktivität;
Erzeugen eines Fütterungsraten-Befehlswerts, um den Futteraufnahmewert einem Sollwert folgen zu lassen;
Bewerten eines Gewichts der Fische;
Berechnen eines Futtermengen-Sollwerts an einem Tag basierend auf dem Bewertungsergebnis des Gewichts der Fische;
Berechnen eines Fütterungsraten-Sollwerts entsprechend der Zeit basierend auf dem Futtermengen-Sollwert und einem Fütterungsmuster, das eine Beziehung zwischen einer verstrichenen Zeit und einer Fütterungsrate von einer Fütterungsstartzeit bis zu einer Fütterungsendzeit repräsentiert;
Korrigieren des Fütterungsraten-Befehlswerts basierend auf einem vorab geplanten Fütterungsraten-Sollwert; und
Steuern der Fütterungsmaschine (5), um mit einer Fütterungsrate zu füttern, die dem Fütterungsraten-Befehlswert entspricht.

## Revendications

1. Procédé d'alimentation mis en œuvre par ordinateur, comprenant :
l'évaluation d'une quantité de nourriture restante sur la base d'un résultat de détection de la nourriture n'ayant pas été ingérée par les poissons d'un bassin (2), au moyen d'un ou
de plusieurs capteurs (6) installés dans le bassin (2) pendant l'alimentation du bassin (2) par une machine d'alimentation (5) ;
l'évaluation de l'activité d'ingestion de nourriture des poissons dans le bassin (2) sur la base d'un résultat de détection des poissons par le ou les capteurs (6) pendant l'alimentation du bassin (2) par la machine d'alimentation (5) ;
**caractérisé par** :
le calcul d'un score d'ingestion de nourriture sur la base d'un résultat d'évaluation de la quantité de nourriture restante et d'un résultat d'évaluation de l'activité d'ingestion de nourriture ;
la génération d'une valeur de commande de débit d'alimentation de sorte que le score d'ingestion de nourriture suive un score de consigne ;
l'évaluation du poids des poissons ;
le calcul d'une valeur de consigne de quantité de nourriture par jour sur la base du résultat de l'évaluation du poids des poissons ;
le calcul d'une valeur de consigne de débit d'alimentation en fonction du temps, sur la base de la valeur de consigne de quantité de nourriture et d'un modèle d'alimentation, le modèle d'alimentation représentant une relation entre le temps écoulé et le débit d'alimentation entre l'heure de début d'alimentation et l'heure de fin d'alimentation ;
la correction de la valeur de commande de débit d'alimentation sur la base d'une valeur de consigne de débit d'alimentation préétablie ; et
la commande de la machine d'alimentation (5) de manière à alimenter avec un débit d'alimentation correspondant à la valeur de commande de débit d'alimentation.

2. Procédé d'alimentation selon la revendication 1, où la valeur de commande de débit d'alimentation est calculée de sorte que la valeur de commande de débit d'alimentation diminue à mesure que la quantité de nourriture restante augmente et que la valeur de commande de débit d'alimentation augmente à mesure que l'activité d'ingestion de nourriture augmente.

3. Procédé d'alimentation selon la revendication 1 ou la revendication 2, où le score d'ingestion de nourriture est calculé de sorte que la direction de variation du score d'ingestion de nourriture à mesure que la quantité de nourriture restante augmente et la direction de variation du score d'ingestion de nourriture à mesure que l'activité d'ingestion de nourriture augmente soient opposées l'une à l'autre.

4. Procédé d'alimentation selon la revendication 3, où le degré d'influence de l'activité d'ingestion de nourriture sur le score d'ingestion de nourriture est réduit en réaction au résultat de l'évaluation indiquant que la quantité de nourriture restante dépasse un niveau prédéterminé.

5. Procédé d'alimentation selon l'une des revendications 1 à 4, comprenant en outre l'affichage du score d'ingestion de nourriture sur une interface d'utilisateur (295).

6. Procédé d'alimentation selon la revendication 5, où le score de consigne est affiché sur l'interface d'utilisateur (295) conjointement avec le score d'ingestion de nourriture.

7. Procédé d'alimentation selon l'une des revendications 1 à 6, où l'heure de début d'alimentation du modèle d'alimentation est modifiée en fonction du temps du lever du soleil, l'heure de fin d'alimentation du modèle d'alimentation est modifiée en fonction du temps du coucher du soleil, et la valeur de consigne de débit d'alimentation en fonction du temps est calculée sur la base du modèle d'alimentation modifié.

8. Procédé d'alimentation selon l'une des revendications 1 à 7, où la valeur de consigne de débit d'alimentation en fonction du temps est calculée de sorte que la quantité de nourriture totale entre l'heure de début d'alimentation et l'heure de fin d'alimentation en fonction du modèle d'alimentation corresponde à la valeur de consigne de quantité de nourriture.

9. Procédé d'alimentation selon l'une des revendications 1 à 8, où l'évaluation du poids des poissons comprend :
l'acquisition d'un résultat de mesure du poids des poissons ;
l'évaluation d'une quantité de nourriture consommée entre un moment de mesure du poids des poissons et un moment de consigne d'évaluation sur la base du débit d'alimentation ;
l'estimation d'un taux de croissance de poids des poissons entre le moment de mesure et le moment de consigne d'évaluation sur la base du résultat d'évaluation de la quantité de nourriture consommée ; et
l'estimation du poids des poissons au moment de consigne d'évaluation sur la base du résultat de mesure du poids des poissons et d'un résultat d'estimation du taux de croissance de poids des poissons.

10. Procédé d'alimentation selon la revendication 9, comprenant en outre l'estimation d'une population de poissons au moment de consigne d'évaluation sur la base d'une population de poissons placés dans le bassin (2),
où un résultat de mesure de poids par poisson est obtenu,
où le poids par poisson au moment de consigne d'évaluation est estimé sur la base du résultat de mesure de poids par poisson et d'un résultat d'estimation du taux de croissance de poids des poissons, et
où le poids total des poissons au moment de consigne d'évaluation est estimé sur la base du résultat de l'estimation du poids par poisson et d'un résultat d'estimation de la population.

11. Procédé d'alimentation selon l'une des revendications 1 à 10, comprenant en outre l'affichage du modèle d'alimentation sur une interface d'utilisateur (295).

12. Procédé d'alimentation selon la revendication 11, où l'heure du lever du soleil et l'heure du coucher du soleil sont affichées sur l'interface d'utilisateur (295) avec le modèle d'alimentation.

13. Procédé d'alimentation selon la revendication 11 ou la revendication 12, comprenant en outre la modification du modèle d'alimentation sur la base d'une entrée d'édition du modèle d'alimentation affiché sur l'interface d'utilisateur (295),
où la valeur de consigne de débit d'alimentation en fonction du temps est calculée sur la base du modèle d'alimentation après modification.

14. Procédé d'alimentation selon l'une des revendications 11 à 13, comprenant en outre :
l'enregistrement du profil d'alimentation affiché sur l'interface d'utilisateur (295) sur la base d'une entrée de commande d'enregistrement ; et
le chargement du profil d'alimentation enregistré sur la base d'une entrée de commande de chargement et l'affichage du profil d'alimentation sur l'interface d'utilisateur (295).

15. Procédé d'alimentation selon la revendication 14, comprenant en outre :
l'affectation du modèle d'alimentation enregistré à un objet de raccourci sur l'interface d'utilisateur (295) sur la base d'une entrée de commande d'affectation ; et
le chargement du modèle d'alimentation enregistré et l'affichage du modèle d'alimentation sur l'interface d'utilisateur (295) en réaction à une opération sur l'objet de raccourci.

16. Procédé d'alimentation selon l'une des revendications 1 à 15, comprenant en outre l'affichage d'un débit d'alimentation actuel sur une interface d'utilisateur (295) pour chaque bassin d'une pluralité de bassins comprenant le bassin (2).

17. Procédé d'alimentation selon l'une des revendications 1 à 10, comprenant en outre l'affichage d'un débit d'alimentation actuel et d'un taux de réalisation de la valeur de consigne de quantité de nourriture sur une interface d'utilisateur (295) pour chaque bassin d'une pluralité de bassins comprenant le bassin (2).

18. Procédé d'alimentation selon l'une des revendications 1 à 17, comprenant en outre l'affichage, sur une interface d'utilisateur (295), d'une proportion d'alimentation représentant une quantité de nourriture en tant que rapport au poids total du poisson et d'un taux d'augmentation du poids total du poisson pour chaque bassin d'une pluralité de bassins comprenant le bassin (2).

19. Procédé d'alimentation selon la revendication 18, où l'affichage de la proportion d'alimentation et du taux d'augmentation sur l'interface d'utilisateur (295) comprend l'affichage d'un tableau de distribution où la proportion d'alimentation et le taux d'augmentation figurant sur une grille de coordonnées comportant un premier axe de coordonnées représentant une valeur de la proportion d'alimentation et un deuxième axe de coordonnées représentant une valeur du taux d'augmentation pour chaque bassin de la pluralité de bassins.

20. Procédé d'alimentation selon la revendication 19, où le tableau de distribution affiche en outre une pluralité de lignes de niveau représentant une relation entre la proportion d'alimentation et le taux d'augmentation pour chaque rapport de conversion alimentaire représentant un rapport entre la proportion d'alimentation et le taux d'augmentation.

21. Procédé d'alimentation selon l'une des revendications 1 à 20, où la quantité de nourriture restante est évaluée sur la base d'une image provenant d'une caméra installée vers le haut sous une zone d'alimentation des poissons dans le bassin (2).

22. Procédé d'alimentation selon la revendication 21, où l'activité d'ingestion de nourriture est en outre évaluée sur la base de l'image de la caméra.

23. Procédé d'alimentation selon la revendication 22, où une valeur de variation d'image due à un déplacement des poissons est calculée sur la base de l'image de la caméra, et l'activité d'ingestion de nourriture est évaluée sur la base de la valeur de variation d'image.

24. Procédé d'alimentation selon la revendication 23, où l'activité d'ingestion de nourriture est évaluée de sorte que l'activité d'ingestion de nourriture diminue à mesure qu'augmente la valeur de variation d'image.

25. Système d'alimentation (3), comprenant :
une machine d'alimentation (5) prévue pour distribuer de la nourriture dans un bassin (2) contenant des poissons ;
un ou plusieurs capteurs (6) prévus pour détecter la nourriture n'ayant pas été ingérée par les poissons dans le bassin (2) ; et
un dispositif de commande d'alimentation (100) prévu pour commander un débit d'alimentation par la machine d'alimentation (5),
où le dispositif de commande d'alimentation (100) comprend :
une unité d'évaluation de quantité de nourriture restante (111) prévue pour évaluer une quantité de nourriture restante sur la base d'un résultat de détection de la nourriture n'ayant pas été ingérée par les poissons du bassin (2), au moyen du ou des capteurs (6) pendant l'alimentation du bassin (2) par la machine d'alimentation (5) ;
une unité d'évaluation d'activité d'ingestion de nourriture (112) prévue pour évaluer l'activité d'ingestion de nourriture des poissons sur la base du résultat de détection des poissons par le ou les capteurs (6) pendant l'alimentation du bassin (2) par la machine d'alimentation (5) ; et
**caractérisé par** une unité de commande de vitesse (114) prévue pour :
calculer un score d'ingestion de nourriture sur la base d'un résultat d'évaluation de la quantité de nourriture restante et d'un résultat d'évaluation de l'activité d'ingestion de nourriture ;
générer une valeur de commande de débit d'alimentation de sorte que le score d'ingestion de nourriture suive un score de consigne ;
évaluer le poids des poissons ;
calculer une valeur de consigne de quantité de nourriture par jour sur la base du résultat d'évaluation du poids des poissons ;
calculer une valeur de consigne de débit d'alimentation en fonction du temps, sur la base de la valeur de consigne de quantité de nourriture et d'un modèle d'alimentation, le modèle d'alimentation représentant une relation entre le temps écoulé et le débit d'alimentation entre l'heure de début d'alimentation et l'heure de fin d'alimentation ;
corriger la valeur de commande de débit d'alimentation sur la base d'une valeur de consigne de débit d'alimentation préétablie ; et
commander la machine d'alimentation (5) de manière à alimenter avec un débit d'alimentation correspondant à la valeur de commande de débit d'alimentation.

26. Programme informatique, comprenant des instructions qui, lorsque ledit programme est exécuté par un dispositif informatique, entraînent ledit dispositif à exécuter :
l'évaluation d'une quantité de nourriture restante sur la base d'un résultat de détection de la nourriture n'ayant pas été ingérée par les poissons d'un bassin (2), au moyen d'un ou
de plusieurs capteurs (6) installés dans le bassin (2) pendant l'alimentation du bassin (2) par une machine d'alimentation (5) ;
l'évaluation d'une activité d'ingestion de nourriture des poissons dans le bassin (2) sur la base du résultat de détection des poissons par le ou les capteurs (6) pendant l'alimentation du bassin (2) par la machine d'alimentation (5) ; et
**caractérisé par** :
le calcul d'un score d'ingestion de nourriture sur la base d'un résultat d'évaluation de la quantité de nourriture restante et d'un résultat d'évaluation de l'activité d'ingestion de nourriture ;
la génération d'une valeur de commande de débit d'alimentation de sorte que le score d'ingestion de nourriture suive un score de consigne ;
l'évaluation du poids des poissons ;
le calcul d'une valeur de consigne de quantité de nourriture par jour sur la base du résultat de l'évaluation du poids des poissons ;
le calcul d'une valeur de consigne de débit d'alimentation en fonction du temps, sur la base de la valeur de consigne de quantité de nourriture et d'un modèle d'alimentation, le modèle d'alimentation représentant une relation entre le temps écoulé et le débit d'alimentation entre l'heure de début d'alimentation et l'heure de fin d'alimentation ;
la correction de la valeur de commande de débit d'alimentation sur la base d'une valeur de consigne de débit d'alimentation préétablie ; et
la commande de la machine d'alimentation (5) de manière à alimenter avec un débit d'alimentation correspondant à la valeur de commande de débit d'alimentation.
